# EUROPEAN PATENT SPECIFICATION

(11) **EP 1 178 624 B1**
(45) Date of publication and mention of the grant of the patent: **09.02.2011**
(21) Application number: 01306636.0
(22) Date of filing: 02.08.2001
(51) Int. Cl.: H04L 1/16, H04L 1/18

(54) **Retransmission control method and system for multicast information distribution service, retransmission control apparatus, wireless base station and wireless terminal**
Wiederübertragungskontrollverfahren und -System für Multicast-Informationsversorgungsdienst, Wiederübertragungskontrollgerät, Schnurlose Basisstation und drahtloses Endgerät
Procédé et système de commande de retransmission pour service de distribution d'informations, dispositif de commande de retransmission, station de base sans fil et terminal sans fil

(30) Priority: 03.08.2000 JP 2000236161; 26.07.2001 JP 2001226139
(43) Date of publication of application: 06.02.2002
(73) Proprietor: NTT DoCoMo, Inc., Tokyo 100-6150 (JP)
(72) Inventor: Sato, Hijin, Yokohama-shi, Kanagawa 234-0054 (JP); Shimada, Kobaruto, Yokosuka-shi, Kanagawa 23/-0012 (JP); Takao, Toshiaki, Yokohama-shi, Kanagawa 236-0042 (JP); Umeda, Narumi, Yokohama-shi, kanagawa 236-005 (JP)
(74) Representative: Vinsome, Rex Martin

(56) References cited:
- EP-A- 0 951 198
- EP-A- 1 089 480
- JP-A- 2000 324 155
- PATENT ABSTRACTS OF JAPAN vol. 2000, no. 14, 5 March 2001 (2001-03-05) & JP 2000 324155 A (HITACHI LTD), 24 November 2000 (2000-11-24)

## Description

### BACKGROUND OF THE INVENTION

This application claims the benefit of a Japanese Patent Application No. 2000-236161 filed August 3, 2000, in the Japanese Patent Office.

### 1. Field of the Invention

The present invention generally relates to retransmission control methods and systems for multicast information distribution services, retransmission control apparatuses and wireless terminals, and more particularly to a retransmission control method and a retransmission control system which control retransmission of multicast information from a retransmission control apparatus via a wireless region to a wireless terminal within a distribution service area for the multicast information.

The present invention also relates to a retransmission control apparatus, a wireless base station and a wireless terminal which carry out processes according to such a retransmission control method for a multicast information distribution service.

### 2. Description of the Related Art

Recently, broadcasting and distribution of music and video via the Internet which uses a cable network, and multicast applications for carrying out cooperative work or remote conferences among a plurality of users, are being established.

In addition, due to the popular use of portable telephone terminals such as portable telephones and PHS terminals, and the popular use of portable information terminals such as lap-top personal computers, it may be expected that the demands to provide wireless multicast services will increase.

The wireless multicast service distributes information with respect to a large number of wireless terminals existing within the service area. When one packet of the information is lost during the distribution of the information to the wireless terminals, a retransmission control is carried out to guarantee a multicast service quality. In other words, an automatic repeat request (ARQ) is carried out to remedy the lost packet.

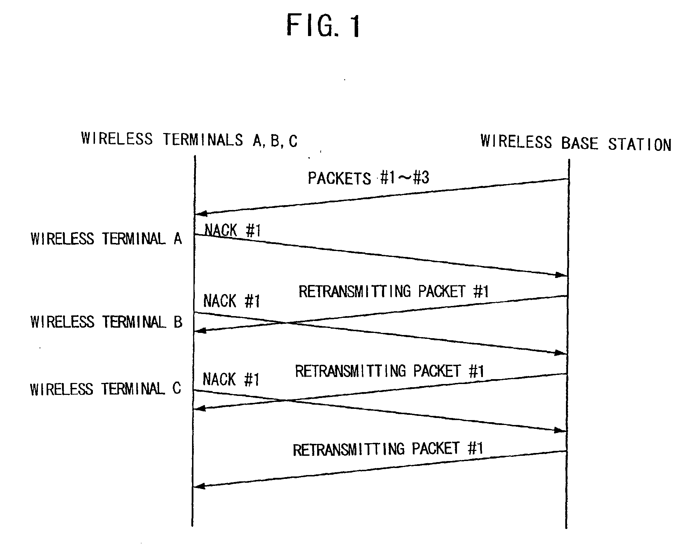

In a system which provides the wireless multicast service described above, the retransmission control (hereinafter simply referred to as the ARQ) between a wireless base station BS and wireless terminals (or wireless terminals) MS is carried out as shown in FIG. 1, for example.

First, the wireless base station BS transmits multicast information formed by packet numbers #1 through #3 to each of the wireless terminals MS (for example, wireless terminals A, B and C). FIG. 1 shows a case where the packet #1 transmitted from the wireless base station BS is not received normally at each of the wireless terminals A, B and C. When a dropout of the packet #1 is detected, each wireless terminal MS returns a retransmission request signal, that is, a negative acknowledgement (NACK) signal, corresponding to the dropped out packet number (the packet #1 in this case), to the wireless base station BS, as indicated by NACK#1 in FIG. 1. Every time the wireless base station BS receives the NACK signal from a wireless terminal MS, the wireless base station BS retransmits the packet corresponding to the NACK signal to the wireless terminal MS which returned the NACK signal, by setting a wireless channel with respect to this wireless terminal MS.

When the number of wireless terminals receiving the same multicast service is large within the wireless region, a plurality of wireless terminals may transmit to the wireless base station a NACK signal corresponding to the same packet which has dropped out. In such a case, the wireless base station receives the same NACK signal from the plurality of wireless terminals, thereby increasing the load on a buffer section and a processor section of the wireless base station. Furthermore, the wireless base station makes a packet retransmission corresponding to each of the NACK signals which are received from the wireless terminals. Hence, when the wireless base station receives the same NACK signal corresponding to the same packet which has dropped out from the plurality of wireless terminals, the wireless base station makes a number of packet retransmissions amounting to the number of times the NACK signal is received from the plurality of wireless terminals. Consequently, even when retransmitting the same packet, the wireless base station must set the wireless channel between the wireless base station and a wireless terminal every time the NACK signal is received therefrom, and it is impossible to efficiently utilize the wireless resources.

On the other hand, a Japanese Laid-Open Patent Application No.2000-115051 proposes a method of reducing a number of responses received by a wireless base station from wireless terminals. According to this proposed method, after the wireless base station transmits the multicast information, the wireless base station requests a response by polling each of the wireless terminals included in a specific receiving station group. A wireless terminal other than the polled wireless terminals monitors the responses of the polled wireless terminals, and returns a NACK response to the wireless base station after a predetermined time if the monitored responses are ACK responses and the monitoring reveals that the multicast information was not correctly received.

But according to this proposed method, the process of the wireless terminal which monitors the responses of the polled wireless terminals becomes complex, and the load on the wireless terminal which carries out the monitoring becomes extremely large. Furthermore, in order to monitor the responses of the polled wireless terminals, it is necessary to continuously use the wireless resources, thereby making it impossible to efficiently utilize the wireless resources as was the case of the conventional system described above.

EP0951198 discloses a retransmission control method according to the preamble of claim 1.

### SUMMARY OF THE INVENTION

According to an aspect of the present invention, there is provided a retransmission control method comprising the features of claim 1.

According to another aspect of the present invention, there is provided a retransmission control system comprising the features of claim 6.

According to another aspect of the present invention, there is provided a wireless terminal comprising the features of claim 16.

Accordingly, it is a general object of the present invention to provide a novel and useful retransmission control method and system for multicast information distribution service, retransmission control apparatus, wireless base station and wireless terminal, in which the problems described above are eliminated.

A first and more specific object of the present invention is to provide retransmission control method and system for multicast information distribution service, which can effectively utilize the wireless resources.

A second and more specific object of the present invention is to provide a retransmission control apparatus and a wireless base station which can carry out processes according to such a retransmission control method.

A third and more specific object of the present invention is to provide a wireless terminal which can carry out processes according to such a retransmission control method.

Still another object of the present invention is to provide a retransmission control method for a multicast information distribution service which distributes multicast information with respect to a plurality of wireless terminals within a service area from an information distribution apparatus via a wireless region, comprising the steps of transmitting a retransmission request for information which requires retransmission, from an arbitrary wireless terminal to the information distribution apparatus, at a timing determined by the wireless terminal when the information which requires retransmission is generated; after receiving the retransmission request for the information from the arbitrary wireless terminal within the service area, notifying retransmission information indicating the information requested by the retransmission request with respect to each of the wireless terminals within the service area from the information distribution apparatus, and retransmitting the information requested by the retransmission request from the information distribution apparatus at a predetermined timing; and making no retransmission request for the information from each of the wireless terminals if the retransmission information is received by each of the wireless terminals before the predetermined timing, so that each of the wireless terminals receives the information retransmitted from the information distribution apparatus at the predetermined timing. According to the retransmission control method of the present invention, it is possible to realize the first object described above.

In this retransmission control method for the multicast information distribution service, when the information which requires retransmission is generated, the wireless terminal transmits the retransmission request for the information to the information distribution apparatus when a timing determined for the wireless terminal is reached. The information distribution apparatus which receives the retransmission request transmits retransmission information which indicates the information requested by the retransmission request, with respect to each of the wireless terminals within the service area, and retransmits the information requested by the retransmission request at a predetermined timing. The information retransmitted from the information distribution apparatus is received by the wireless terminal which transmitted the retransmission request for the information.

When the wireless terminal receives from the information distribution apparatus the retransmission information which indicates the information requested by the retransmission request before the timing determined for the wireless terminal is reached, the wireless terminal does not transmit the retransmission request for the information, and receives the information which is retransmitted from the information distribution apparatus at the predetermined timing.

Therefore, according to such a retransmission control, the timing for transmitting the retransmission request for the information is determined at each of the wireless terminals which receive the same multicast information distribution service, when the information which requires retransmission is generated. Since the timing for transmitting the retransmission request for the same information is determined individually at each of the wireless terminals, it is possible to make the transmission timings different among the wireless terminals. For this reason, there may exist a wireless terminal which receives from the information distribution apparatus the retransmission information indicating the information which requires retransmission, before the timing for transmitting the retransmission request from this wireless terminal arrives. As a result, the retransmission request is not transmitted from such a wireless terminal. Accordingly, even in a case where the information which requires retransmission is generated at a plurality of wireless terminals which receive the same multicast information distribution service, it is possible to prevent the retransmission request for the same information from being transmitted from all of these plurality of wireless terminals.

The information distribution apparatus is not limited to a particular type of apparatus, as long as the information distribution apparatus is designed to distribute multicast information via a wireless region. For example, the information distribution apparatus may be formed by a wireless base station which makes a wireless communication with the wireless terminals or, another apparatus which is coupled to the wireless base station. In addition, the functions of the information distribution apparatus may be distributed between the wireless base station and the other apparatus which is coupled to the wireless base station.

The timings at which the wireless terminals transmit the retransmission requests for the information with respect to the information distribution apparatus, which are determined at the wireless terminals, are desirably different among the wireless terminals which receive the same multicast information distribution service. For this reason, every time the information which requires retransmission is generated at each wireless terminal, the timing for transmitting the retransmission request for the information may be determined at random. Further, every time the information which requires retransmission is generated at each wireless terminal, it is possible to change the method of determining the timing for transmitting the retransmission request for the information.

However, when the same information which requires retransmission is generated at a plurality of wireless terminals which receive the same multicast information distribution service, from the point of view of at least preventing the retransmission requests for the same information from being transmitted from all of the plurality of wireless terminals, the method of determining the timing for transmitting the retransmission request for the information is not limited to a particular method, as long as the timing for transmitting the retransmission request determined in at least one wireless terminal is different from the timings for transmitting the retransmission requests determined in the other wireless terminals.

When the same information which requires retransmission is generated at a plurality of wireless terminals which receive the same multicast information distribution service, the timings for transmitting the retransmission requests determined in several wireless terminals may become the same or different, to thereby result in a situation where the timings for transmitting the retransmission requests determined in several wireless terminals occur prior to a timing at which the retransmission information is received by the several wireless terminals in response to a retransmission request from another wireless terminal. In such a situation, the retransmission request for the same information will be transmitted from a plurality of wireless terminals which receive the same multicast information distribution service. Hence, from the point of view of enabling efficient utilization of the wireless resources when notifying the retransmission information from the information distribution apparatus even in such a situation, the retransmission control method for the multicast information distribution service may further comprise the step of intensively managing in the information distribution apparatus retransmission requests for the same information made with respect to the same multicast information distribution service until the predetermined timing, and retransmitting from the information distribution apparatus information related to intensively managed retransmission requests at the predetermined timing.

From the point of view of positively receiving the retransmission information and the information which is retransmitted at the wireless terminal, the retransmission control method for the multicast information distribution service may further comprise the steps of including information related to the predetermined timing at which the information requested by the retransmission request is retransmitted in the retransmission information, and notifying each of the wireless terminals within the service area from the information distribution apparatus information related to a transmission channel and a transmission timing for notifying the retransmission information and information related to a transmission channel for retransmitting the information requested by the retransmission request; and receiving the retransmission information by each of the wireless terminals within the service area based on the information which is received from the information distribution apparatus and is related to the transmission channel and the transmission timing for notifying the retransmission information, and receiving the information retransmitted from the information distribution apparatus based on the information related to the transmission channel for retransmitting the information and the information related to the predetermined timing included in the retransmission information which are received from the information distribution apparatus.

From the point of view of enabling distributed retransmission of the information requested by the retransmission request from the information distribution apparatus, the retransmission control method for the multicast information distribution service may further comprise the step of managing the information requested by the retransmission request in categories according to a predetermined rule, and managing timings for retransmitting the information for each of the categories, in the information distribution apparatus.

According to such a retransmission control method for the multicast information distribution service, it is possible to retransmit the information requested by the retransmission requests in the different categories at different timings.

From the point of view of controlling the number of retransmissions of the information depending on the characteristic and importance of the multicast information which is distributed, the retransmission control method for the multicast information distribution service may further comprise the step of controlling an upper limit value of a number of retransmissions of the information requested by the retransmission request depending on the multicast information which is distributed from the information distribution apparatus.

A further object of the present invention is to provide a retransmission control system for a multicast information distribution service which distributes multicast information with respect to a plurality of wireless terminals within a service area from an information distribution apparatus via a wireless region, comprising timing determination means, in each wireless terminal, for determining a timing at which a retransmission request for information which requires retransmission is to be transmitted when the information which requires retransmission is generated; first retransmission control means, in each wireless terminal, for transmitting the retransmission request for the information with respect to the information distribution apparatus at the timing determined by said timing determination means; retransmission control information managing means, in the information distribution apparatus, for managing retransmission information indicating the information requested by the retransmission request after receiving the retransmission request for the information from an arbitrary wireless terminal within the service area; and second retransmission control means, in the information distribution apparatus, for transmitting the information related to the retransmission request indicated by the retransmission information to each of the wireless terminals within the service area at a predetermined timing; wherein each wireless terminal makes no retransmission request for the information by the first transmission control means if the retransmission information is received before the timing determined by said timing determination means, so that each wireless terminal receives the information retransmitted from the information distribution apparatus at the predetermined timing. According to the retransmission control system of the present invention, it is possible to similarly realize the first object described above.

Another object of the present invention is to provide a retransmission control apparatus which is provided in an information distribution apparatus which distributes multicast information with respect to a plurality of wireless terminals within a service area via a wireless region and controls retransmission of information, comprising retransmission information transmission control means for notifying retransmission information indicating information requested by a retransmission request with respect to each of the wireless terminals within the service area after receiving the retransmission request from an arbitrary wireless terminal within the service area; and retransmission control means for transmitting the information requested by the retransmission request and indicated by the retransmission information at a predetermined timing, so that each of the wireless terminals determines whether or not to make a retransmission request for the information by referring to the retransmission information notified by said retransmission information transmission control means when information which requires retransmission is generated. According to the retransmission control apparatus of the present invention, it is possible to realize the second object described above.

Still another object of the present invention is to provide a wireless terminal which receives multicast information distributed from an information distribution apparatus via a wireless region, and receives information retransmitted from the information distribution apparatus according to a retransmission control, comprising timing determination means for determining a timing for transmitting a retransmission request for information which requires retransmission; and retransmission control means for transmitting the retransmission request for the information with respect to the information distribution apparatus at the timing determined by said timing determination means; wherein no retransmission request for the information is transmitted by the retransmission control means if the retransmission information is received before the timing determined by said timing determination means, so as to receive the information retransmitted from the information distribution apparatus at the predetermined timing. According to the wireless terminal of the present invention, it is possible to realize the third object described above.

Another object of the present invention is to provide a wireless base station for distributing multicast information with respect to a plurality of wireless terminals within a service area, comprising notifying means for notifying retransmission information which indicates that predetermined information is requested by a retransmission request to each of the wireless terminals within the service area, in response to the retransmission request from an arbitrary wireless terminal within the service area. According to the wireless base station of the present invention, it is possible to realize the second object described above.

The wireless base station may further comprise retransmitting means for retransmitting the predetermined information requested by the retransmission request to each of the wireless terminals within the service area, at a timing which can be set arbitrarily, so as to realize the second object described above.

In the wireless base station, the retransmitting means may copes with one retransmission of the predetermined information with respect to a plurality of retransmission requests which request the predetermined information, if the retransmission request requesting the predetermined information is received from one or more wireless terminals within the service area before the predetermined information is retransmitted to each of the wireless terminals within the service area, so as to realize the second object described above.

Still another object of the present invention is to provide a wireless terminal which is usable within an arbitrary service area, comprising retransmission request means for making a retransmission request with respect to a wireless base station when predetermined information which requires retransmission is generated; and control means for discontinuing transmission of the retransmission request for the predetermined information from said retransmission request means when notified of retransmission information which indicates that a retransmission request for the predetermined information is made from another wireless terminal within the arbitrary service area at a timing before said retransmission request means makes the retransmission request. According to the wireless terminal of the present invention, it is possible to realize the third object described above.

Other objects and further features of the present invention will be apparent from the following detailed description when read in conjunction with the accompanying drawings.

### BRIEF DESCRIPTION OF THE DRAWINGS

FIG. 1 is a diagram showing an example of a conventional retransmission control method;
FIG. 2 is a diagram showing a structure of a mobile communication system in which a retransmission control is carried out in accordance with a first embodiment of a retransmission control method according to the present invention;
FIG. 3 is a system block diagram showing a basic structure of a wireless base station of the mobile communication system shown in FIG. 2;
FIG. 4 is a diagram showing a structure of a distribution information table;
FIG. 5 is a diagram showing a structure of a retransmission control information table;
FIG. 6 is a flow chart showing a process of a retransmission control section of an information distribution control unit of the wireless base station;
FIG. 7 is a timing chart showing transmission timings of the retransmission control information table and retransmitting packets;
FIG. 8 is a diagram showing a relationship of various information to be received by a time when each wireless terminal receives a retransmitted packet;
FIG. 9 is a flow chart showing a process carried out in each wireless terminal;
FIG. 10 is a system block diagram showing a mobile communication system in which a retransmission control is carried out in accordance with a second embodiment of the retransmission control method according to the present invention;
FIG. 11 is a flow chart for explaining the operation of a wireless base station and a wireless terminal of the second embodiment; and
FIG. 12 is a flow chart for explaining the operation of the wireless base station of the second embodiment in more detail.

### DESCRIPTION OF THE PREFERRED EMBODIMENTS

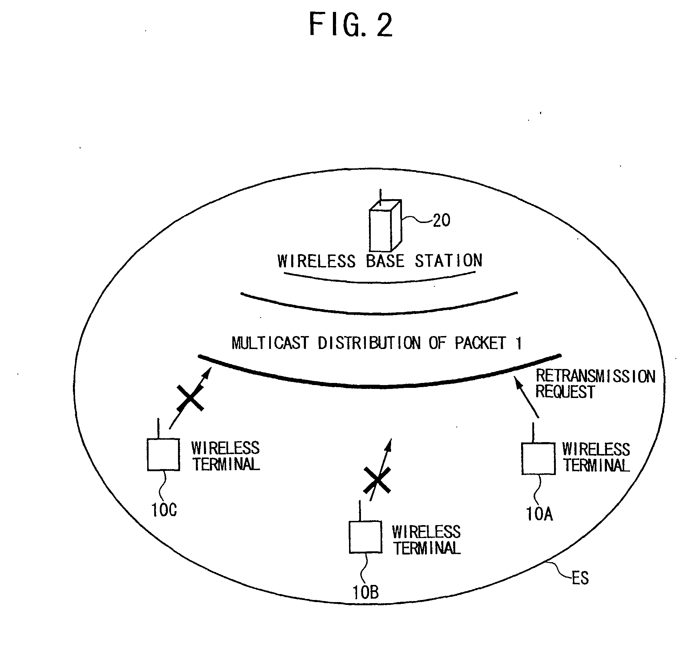

A description will be given of various embodiments of retransmission control method and system for a multicast information distribution service according to the present invention, a retransmission control apparatus according to the present invention, a wireless base station according to the present invention, and a wireless terminal according to the present invention, by referring to FIGS. 2 through 12.

FIG. 2 is a diagram showing a structure of a mobile communication system in which a retransmission control for a multicast information distribution service is carried out in accordance with a first embodiment of a retransmission control method according to the present invention. This first embodiment of the retransmission control method employs a first embodiment of the retransmission control system according to the present invention, a first embodiment of a retransmission control apparatus according to the present invention, a first embodiment of a wireless base station according to the present invention, and a first embodiment of a wireless terminal according to the present invention.

In FIG. 2, a wireless base station 20 makes a multicast distribution of information (multicast information) based on the multicast information distribution service in units of packets within a service area (wireless or radio zone) ES. Each of wireless terminals (mobile stations) 10A, 10B and 10C existing within the service area ES receives the multicast information which is distributed from the wireless base station 20 in units of packets. When one of the wireless terminals 10A, 10B and 10C which receives the multicast information distribution fails to receive a certain packet 1 in this mobile communication system, the following retransmission control is basically carried out.

Each of the wireless terminals 10A, 10B and 10C which fails to receive the packet 1 transmits a retransmission request signal to the wireless base station 20 at an arbitrary timing. When the wireless base station 20 receives the retransmission request signal with respect to the packet 1 from the wireless terminal 10A, for example, as indicated by an arrow in FIG. 2, the wireless base station 20 notifies each of the wireless terminals 10A, 10B and 10C within the service area ES that the retransmission request signal with respect to the packet 1 has already been received. When the wireless terminals 10B and 10C receive this notification that the retransmission request signal with respect to the packet 1 has already been received, before the respective arbitrary timings at which the retransmission request signal is transmitted with respect to the wireless base station 20, the wireless terminals 10B and 10C discontinue the transmission of the retransmission request signal with respect to the packet 1, as indicated by marks "X" in FIG. 2. After notifying that the retransmission request signal with respect to the packet 1 has already been received, the wireless base station 20 retransmits the packet 1 at a predetermined timing, so as to carry out again the multicast distribution of the information. Each of the wireless terminals 10A, 10B and 10C carries out a receiving process with respect to the packet 1 which is retransmitted from the wireless base station 20 by this multicast distribution.

By carrying out this retransmission control, unlike the prior art, it is possible to prevent the retransmission request signal such as the NACK signal from being transmitted from all of the plurality of wireless terminals 10A, 10B and 10C which receive the same multicast information distribution service but fail to receive a certain packet. For this reason, it is possible to efficiently utilize the wireless resources of the mobile communication system.

In addition, in a case where the wireless base station 20 receives the retransmission request signal with respect to the packet 1 from the wireless terminal 10A and thereafter receives the retransmission request signal with respect to the same packet 1 from the wireless terminal 10B before reaching the predetermined timing at which the retransmission of the packet 1 is made, the wireless base station 20 carries out an intensive management of the retransmission request signals with respect to the same packet 1. In other words, the wireless base station 20 does not independently transmit the packet 1 with respect to each retransmission request signal. Accordingly, even when the wireless base station 20 receives a plurality of retransmission request signals with respect to the same packet 1, the wireless base station 20 retransmits the packet 1 with respect to the plurality of retransmission request signals at the predetermined timing described above instead of independently responding to each of the plurality of retransmission request signals.

By carrying out this retransmission control, even when a plurality of retransmission request signals are generated with respect to the same packet 1, it is possible to efficiently utilize the wireless resources which are used to retransmit the packet 1 with respect to the plurality of retransmission request signals.

Next, a more detailed description will be given of the mobile communication system.

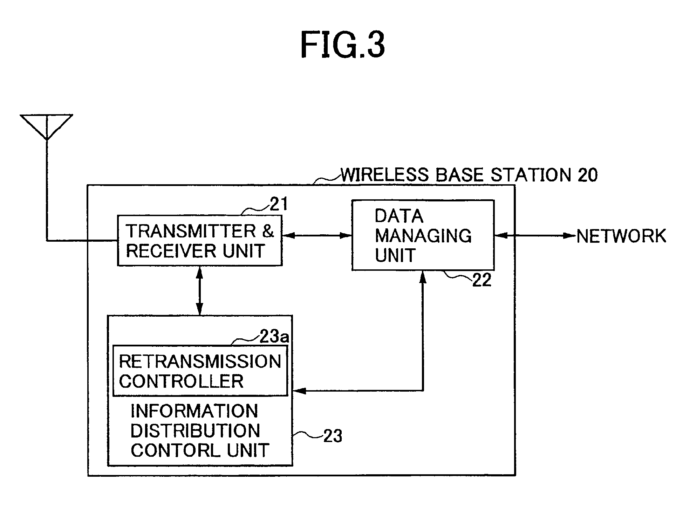

FIG. 3 is a system block diagram showing a basic structure of the wireless base station 20 of the mobile communication system shown in FIG. 2.

The wireless base station 20 shown in FIG. 3 includes a transmitter and receiver unit 21, a data managing unit 22, and an information distribution control unit 23. The information distribution control unit 23 includes a retransmission controller 23a. The data managing unit 22 is coupled to a network which is not shown in FIG. 3. The data managing unit 22 acquires from the network the multicast information which is to be distributed, and stores the acquired multicast information. The information distribution control unit 23 carries out a control to distribute the multicast information stored in the data managing unit 22 from the transmitter and receiver unit 21 to each of the wireless terminals 10A, 10B and 10C within the service area ES in units of packets. In addition, the retransmission controller 23a within the information distribution control unit 23 carries out a retransmission control to retransmit from the transmitter and receiver unit 21 a packet which is requested by the retransmission request signal which is transmitted from one of the wireless terminals 10A, 10B and 10C and is received by the transmitter and receiver unit 21.

The multicast information which is to be distributed from the wireless base station 20 is of course not limited to that obtained via the network.

The information distribution control unit 23 manages transmission channels, transmission timings and the like of the various information to be distributed, based on a distribution information table shown in FIG. 3. In addition, by notifying this distribution information table to each of the wireless terminals 10A, 10B and 10C, it is possible to notify to each of the wireless terminals 10A, 10B and 10C information related to the kind of multicast information distribution which is presently provided, the transmission channel of each multicast information distribution service, and the retransmission.

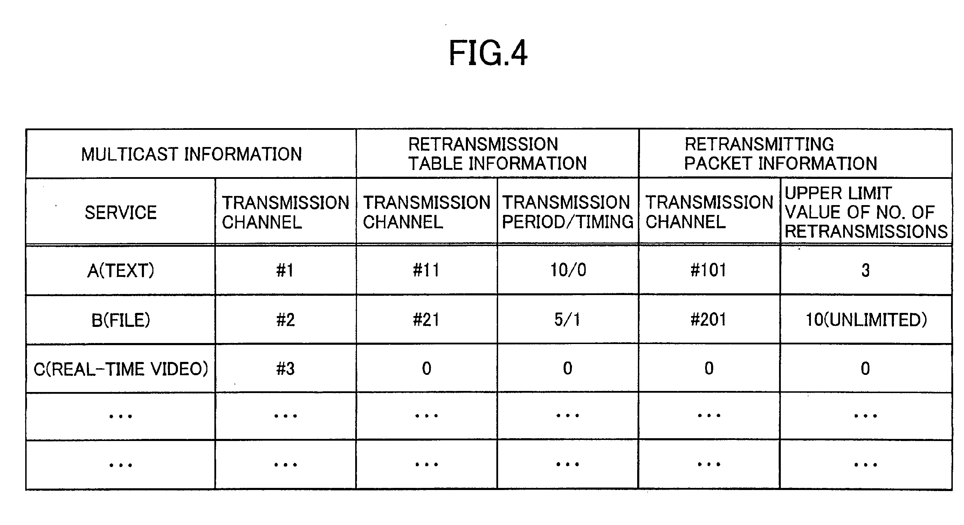

The multicast information which is distributed from the wireless base station 20, retransmission table information related to a retransmission control information table which is used for the retransmission control, retransmitting packet information indicating the transmission channel of each retransmitting packet based on the retransmission request signal, and the like are written in the distribution information table shown in FIG. 4. In other words, the transmission channels #1, #2, #3, ... which are used for the multicast information distribution services, the transmission channels #11, #21, ..., the transmission periods and the reference timings of the transmission periods ((transmission period)/(timing): 10/0, 5/1, ...) of the retransmission control information table related to the multicast information distribution services, the transmission channels "101, #201, ... of the retransmitting packets during the multicast information distribution services, and the upper limit values (3, 10 (unlimited), ...) of the number of packet retransmissions are written in the distribution information table in correspondence with service information A, B, C, ... specifying the multicast information distribution services. The transmission channel included in the multicast information and the transmission channel included in the retransmitting packet information may be the same channel or may be mutually different channels.

For example, the service information A specifies a multicast text distribution service, the service information B specifies a multicast file distribution service, and the service information C specifies a real-time video distribution service.

Based on this distribution information table, the multicast text distribution service specified by the service information A, for example, is made by use of the transmission channel #1, and the retransmission control information table related to the distribution service A is distributed for every period "10" from the reference timing "0" in the transmission channel #11. In this case, it may be seen that the packet retransmission for this multicast text distribution service which is specified by the service information A is made with a limit of three times by use of the transmission channel #101.

The service information A, B, C, ... for specifying the multicast information distribution services are not limited to particular information as long as the multicast information distribution services can be specified. For example, a title, IP address or the like of the multicast information distribution service may be used as the service information A, B, C, ... . Each transmission channel can be specified by a channel identifier for identifying the channel which is used to exchange information between the wireless base station 20 and each of the wireless terminals 10A, 10B and 10C. For example, when the access method employed is the time division multiple access (TDMA), it is possible to uniquely determine the transmission channel by a time slot number and a frequency number within the wireless frame. In addition, by adding a channel number #1, #2 or the like to each transmission channel and providing a correspondence table of the channel numbers, the time slot numbers and the frequency numbers in the wireless base station 20 and each of the wireless terminals 10A, 10B and 10C, it becomes possible to identify the transmission channel solely from the channel number. Furthermore, when employing an access method other than the TDMA, it is possible to cope with the employed access method by making appropriate modifications to the contents of the correspondence table. For example, in the case of the code division multiple access (CDMA), the correspondence table stores the correspondence of the code numbers and the frequency numbers with respect to each of the channel numbers.

The retransmission control information table described above is used when the retransmission controller 23a of the information distribution control unit 23 carries out the packet retransmission control. The retransmission control information table is also used when the wireless base station 20 receives the retransmission request signal from an arbitrary wireless terminal and notifies the request content of the retransmission request signal to other wireless terminals which receive the same multicast information distribution service as the arbitrary wireless terminal, so as to suppress transmission of retransmission request signals having the same request content from the other wireless terminals. A more detailed description of the retransmission control information table will be given later. The transmission period and the reference timing of the retransmission control information table are described in units of frames, for example. A default value of the reference timing, which is 0, for example, is determined in advance based on a reception timing of the distribution information table and the like.

The values of each of the items in the distribution information table may be set arbitrarily depending on the characteristics of the multicast information which is distributed. For example, in the case of the multicast text distribution service specified by the service information A, the transmission rate of the multicast information (text) is relatively low and the packet error rate is relatively small. In such a case, the probability of the packet loss at each of the wireless terminals 10A, 10B and 10C which receives the multicast information distribution is relatively small, and thus, it is unnecessary to frequently transmit from the wireless base station 20 the retransmission control information table which is referred to when each of the wireless terminals 10A, 10B and 10C makes the packet retransmission request by the retransmission request signal. For this reason, the transmission period of the retransmission control information table may be set to a relatively large value, such as 10, for example. In addition, since the packet error rate is relatively small in this case, the number of packet retransmissions needs to be set to a value on the order of several times (for example, three times), so as to suppress the packet error rate.

Accordingly, by setting the transmission period of the retransmission control information table to a relatively large value, the transmission frequency of the retransmission control information table is reduced, and it becomes possible to efficiently utilize the wireless resources used for the transmission of the retransmission control information table.

In addition, in the case of the multicast file distribution service which is specified by the service information B and distributes a file which cannot tolerate even a 1-bit error regardless of how large the delay is, there is no limit to the number of packet retransmissions so that the packets are received by the wireless terminals completely error-free. In such a case, a value "10" which is internally defined in the mobile communication system is set as the upper limit value of the number of packet retransmissions. Since a large number of packet retransmissions can be expected, it is preferable that the retransmission control information table which is referred to by each of the wireless terminals 10A, 10B and 10C when making the retransmission request is transmitted relatively frequently from the wireless base station 20. Hence, the transmission period of the retransmission control information table with respect to the multicast file distribution service specified by the service information B is set to a value which is smaller than that set for the multicast text distribution service specified by the service information A. For example, the transmission period of the retransmission control information table with respect to the multicast file distribution service is set to "5", and the transmission period of the retransmission control information table with respect to the multicast text distribution service is set to "10".

Furthermore, in the case of the real-time video distribution service specified by the service information C, it is normally necessary to distribute the information without delay because the distributed information has real-time continuity, and for this reason, such information cannot be retransmitted. In such a case, the values of each of the items related to the retransmission control information table and the values of each of the items related to the retransmitting packets are set to "0"which is defined in the mobile communication system as a value indicating that no retransmission is made. By transmitting from the wireless base station 20 to each of the wireless terminals 10A, 10B and 10C the distribution information table in which the values are set in this manner, it is possible to notify each of the wireless terminals 10A, 10B and 10C that no retransmission will be made, and prohibit transmission of the retransmission request signal from each of the wireless terminals 10A, 10B and 10C.

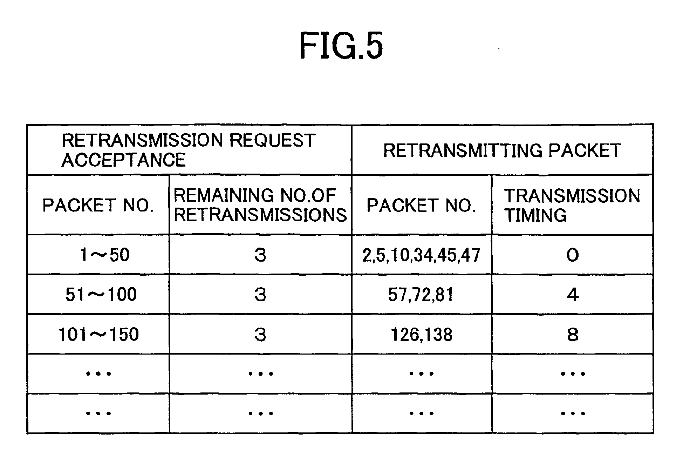

As described above, the retransmission controller 23a of the information distribution control unit 23 carries out the retransmission control according to the retransmission control information table. For example, this retransmission control information table is formed as shown in FIG. 5.

The retransmission control information table shown in FIG. 5 includes management items related to retransmission request acceptance, and management items related to retransmitting packets. The management items related to the retransmitting packets are indicated as "retransmitting packets" in FIG. 5. The management items related to the retransmission request acceptance manage a remaining number of retransmissions for each range of packet numbers for which the retransmission request is accepted. The ranges of the packet numbers are "1 to 50", "51 to 100", "101 to 150", ... . An initial value of the remaining number of retransmission is set to the upper limit value of the number of packet retransmissions managed by the distribution information table shown in FIG. 4. As will be described later, the remaining number of packet retransmissions is decremented by one every time a packet retransmission is made. The management items related to the retransmitting packets manage the packet number and the retransmission timing of each packet with respect to which the retransmission request is accepted, for each range of packet numbers.

In the retransmission control information table shown in FIG. 5, the retransmission requests are made with respect to the packet numbers "2", "5", "10", "34", "45" and "47" in the range of packet numbers "1" to "50". The remaining number of packet retransmissions is "3", and the retransmission timing of the retransmitting packet is "0". The retransmission timing "0" indicates that the requested packet numbers "2", "5", "10", "34", "45" and "47" are to be retransmitted at the present timing. The value of the retransmission timing is decremented by one every time the retransmission control information table is transmitted from the wireless base station 20, as will be described later.

The distribution information table shown in FIG. 4 is transmitted from the wireless base station 20 to each of the wireless terminals 10A, 10B and 10C at a predetermined timing, under the control of the information distribution control unit 23. In addition, the retransmission control information table with respect to each multicast information distribution table and the retransmitting packet are transmitted from the wireless base station 20 to each of the wireless terminals 10A, 10B and 10C at a predetermined timing, under the control of the retransmission controller 23a of the information distribution control unit 23.

The value of the "upper limit value of packet retransmissions" of each record corresponding to the multicast information distribution service in the information distribution table shown in FIG. 4, and the values of the "range of packet numbers" and the "retransmission timing" in the retransmission control information table shown in FIG. 5 corresponding to the multicast information distribution service, may be included in advance as retransmission control information within the multicast information which is provided from a server to the wireless base station 20 via a network. For example, in the case of the multicast information distribution service specified by the service information A, retransmission control information indicating that the "range of packet numbers" is "50", the "upper limit value of packet retransmissions" is "3" and the "retransmission timing" is "4" is included in the multicast information.

The information distribution control unit 23 sets the values which are provided as the retransmission control information, as default values, in the corresponding items of the information distribution table and the retransmission control information table. Further, since the state of use of the wireless resources is different for each wireless zone, the information distribution control unit 23 can appropriately modify the values of the "range of packet numbers", "upper limit value of packet retransmissions" and "retransmission timing" depending on the state of use of the wireless resources within the wireless zone.

The record corresponding to each range of packet numbers in the retransmission control information table shown in FIG. 5 is registered in the retransmission control information table, every time a number of packets equal to the value of the "range of packet numbers" which is included in the distributed multicast information as the retransmission control information is distributed.

In this particular case, the retransmission control information table is set for each multicast information distribution service, that is, for each of the service information A, B, C, ... shown in FIG. 4, but the retransmission control information table is of course not limited to such.

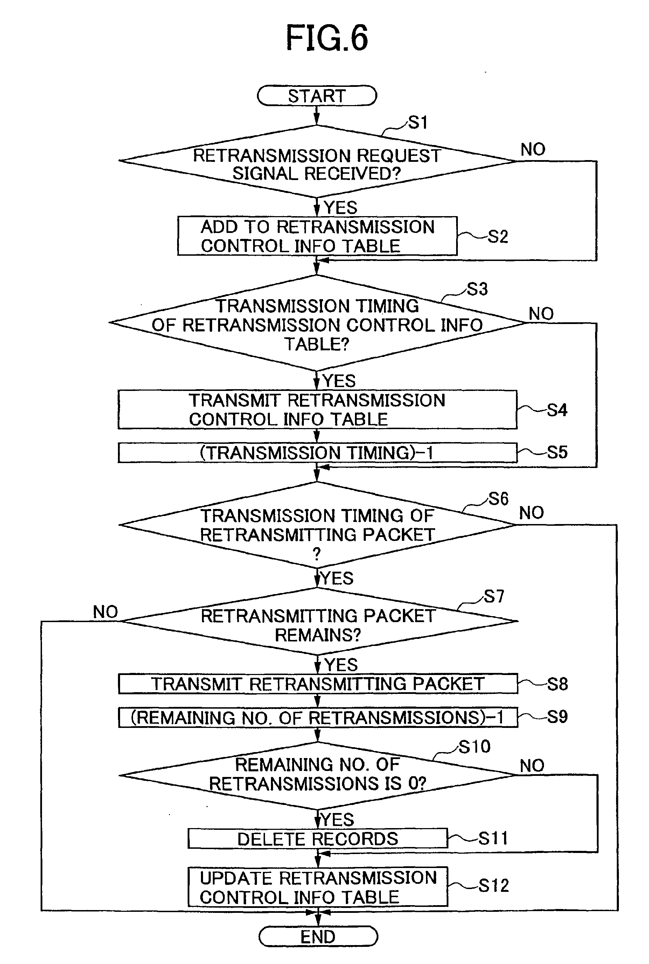

The packet retransmission process of the retransmission controller 23a may be carried out according to a procedure shown in FIG. 6.

In FIG. 6, A step S1 decides whether or not a retransmission request signal which will be described later is received from one of the wireless terminals which receive a certain multicast information distribution service. If the decision result in the step S1 is YES, a step S2 the packet which is requested by the retransmission request signal is added to the management item related to the transmitting packets in the retransmission control information table shown in FIG. 5 corresponding to the certain multicast information distribution service. If the packet requested by the retransmission request signal is already registered in the retransmission control information table, the requested packet is overwritten on the packet which is already registered in the retransmission control information table, and thus, substantially no additional registration is made as a result. Hence, an intensive management is carried out on a plurality of retransmission request signals with respect to the same packet, so that the packet retransmission is not made in response to each of the plurality of retransmission request signals with respect to the same packet. After adding the packet which is requested by the retransmission request signal to the retransmission control information table by the step S2 or, if the decision result in the step S1 is NO, a step S3 refers to the transmission timing of the retransmission control information table shown in FIG. 5 corresponding to the multicast information distribution service which is indicated in the distribution information table shown in FIG. 4, and decides whether or not the present timing is the transmission timing for the retransmission control information table.

If the decision result in the step S3 is YES, a step S4 distributes the retransmission control information table using the transmission channel which is indicated in the distribution information table shown in FIG. 4. After the step S4 or if the decision result in the step S3 is NO, a step S5 decrements the value of each "retransmission timing" item in the retransmission control information table shown in FIG. 5. After the step S5, a step S6 decides whether or not the present timing is the retransmission timing for retransmitting the requested packet. The decision of the step S6 is made by determining whether or not the value of the "retransmission timing" item is "0" in the records at the uppermost row in the retransmission control information table shown in FIG. 5. The records at the uppermost row include the items such as the "range of packet numbers", "remaining number of packet retransmissions", "packet number" and "retransmission timing" described above. Hence, it is judged that the present timing is the retransmission timing for the retransmitting packet if the value of the "retransmission timing" item is "0", and it is otherwise judged that the present timing is not the retransmission timing for the retransmitting packet.

If the decision result in the step S6 is YES, a step S7 refers to the retransmission control information table shown in FIG. 5 and decides whether or not a packet to be retransmitted exists. More particularly, the decision of the step S7 is made by determining whether or not a packet is registered under the "packet number" item in the records at the uppermost row of the retransmission control information table. If the decision result in the step S7 is YES, each packet which is registered under the "packet number" item in the records at the uppermost row of the retransmission control information table is successively distributed, that is, retransmitted, from the wireless base station 20 to each of the wireless terminals 10A, 10B and 10C, using the transmission channel for the retransmitting packet indicated in the distribution information table shown in FIG. 4. For example, in the case where the distribution information table shown in FIG. 4 and the retransmission control information table shown in FIG. 5 are used, the packets having the packet numbers "2", "5", "10", "34", "45" and "47" which are registered under the "packet number" item in the records at the uppermost row corresponding to the range of packet numbers "1" to "50", for example, are successively retransmitted from the wireless base station 20 to each of the wireless terminals 10A, 10B and 10C, using the transmission channel #101 for the retransmitting packets with respect to the multicast text distribution service specified by the service information A.

When the packet retransmission described above ends, a step S9 clears the packets registered under the "packet number" item in the records at the uppermost row of the retransmission control information table shown in FIG. 5, and decrements the value of the "remaining number of retransmissions" item by one. Then, a step S10 decides whether or not the value of the "remaining number of retransmissions" item is "0". If the decision result in the step S10 is NO, a step S12 carries out an updating process with respect to the retransmission control information table. This updating process with respect to the retransmission control information table sets a new value according to a predetermined rule to the "retransmission timing" item in the records at the uppermost row of the retransmission control information table, and these records at the uppermost row are moved to a lowermost row of the retransmission control information table. Consequently, the records in the other rows are respectively shifted by one row towards the uppermost row of the retransmission control information table.

If the present timing is not the retransmission timing of the retransmitting packet, that is, the values of the "transmission timing" item in the records at all of the rows which are successively decremented by one every time the retransmission control information table is transmitted by the steps S3, S4 and S5 and the value of the "transmission timing" item in the records at the uppermost row of the retransmission control information table is not "0", the decision result in the step S6 becomes NO. The steps S7 through S12 related to the packet retransmission are not carried out if the decision result in the step S6 is NO, and the retransmission control ends.

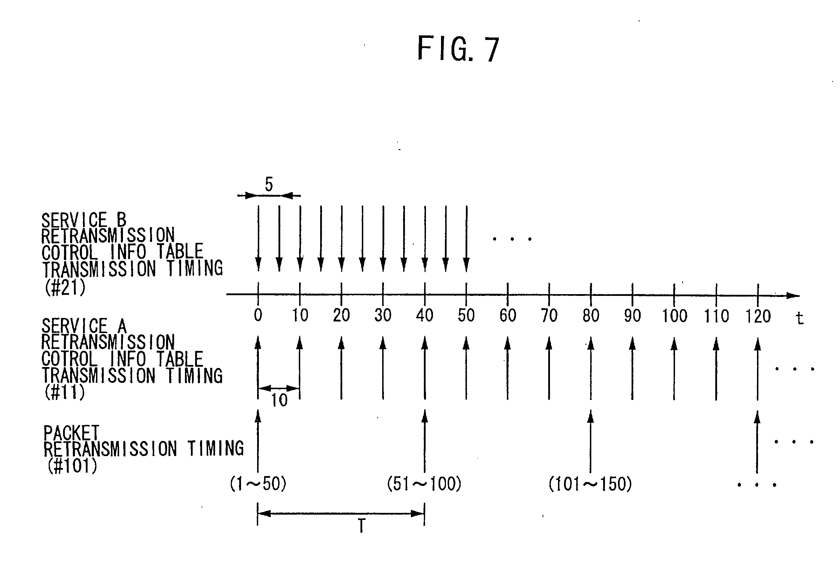

When the distribution information table shown in FIG. 4 and the retransmission control information table shown in FIG. 5 are used and the process described above is repeated, the retransmission control information table with respect to the multicast text distribution service specified by the service information A is repeatedly transmitted as shown in FIG. 7, using the transmission channel #11 from the reference timing "0" with the transmission period "10" indicated on the distribution information table shown in FIG. 4.

In addition, the retransmission control information table with respect to the multicast file distribution service specified by the service information B is repeatedly transmitted as shown in FIG. 7, using the transmission channel #21 from the reference timing "1" with the transmission period "5" indicated on the distribution information table shown in FIG. 4.

FIG. 7 is a timing chart showing transmission timings of the retransmission control information table and the retransmitting packets. In FIG. 7, shows a transmission timing of the retransmission control information table corresponding to the service specified by the service information B using the transmission channel #21 and having a transmission period "5", a transmission timing of the retransmission control information table corresponding to the service specified by the service information A using the transmission channel #11 and having a transmission period "10", and a transmission timing of the packet using the transmission channel #101 and having a transmission period T. In FIG. 7, the time base (t) is indicated in units of one frame, and "(1 ∼ 50)", " (51 ∼ 100)", and "(101 ∼ 150) " shown below the packet transmission timing respectively indicate the packet number ranges of the packets which are transmitted.

In the case of the multicast text distribution service specified by the service information A, after the packets having the packet numbers "2", "5", "10", "34", "45" and "47" in the range of packet numbers "1" to "50" are successively retransmitted, the retransmission control information table is transmitted four times by the steps S3, S4 and S5, in a state where the records corresponding to the range of packet numbers "51" to "100" are positioned at the uppermost row of the retransmission control information table. If the value of the "transmission timing" item corresponding to the range of packet numbers "51" to "100" becomes "0" and the decision result in the step S6 is YES, the packets having the packet numbers "57", "72" and "81" in the range of packet numbers "51" to "100" are successively retransmitted by the steps S7 and S8. Hence, in the case of the retransmission control based on the retransmission control information table shown in FIG. 5 with respect to the multicast text distribution service specified by the service information A, the retransmitting packet is transmitted every time the retransmission control information table is transmitted four times.

As the above described process is repeated if no retransmission request signal with respect to a packet in a corresponding range of packet numbers is received by a next timing after retransmitting the packet, and there is no packet which is registered in the "packet number" item in the records positioned at the uppermost row of the retransmission control information table, the decision result in the step S7 becomes NO, the process ends. On the other hand, if the distribution of the packet which is registered under the "packet number" item in the records positioned at the uppermost row of the retransmission control information table ends in the step S8, the value of the "remaining number of retransmissions" item is decremented by one in the step S9, and the value of the "remaining number of retransmissions" item becomes "0" to thereby make the decision result in the step S10 YES, it is regarded that the set number of retransmissions have ended, and the step S11 deletes the corresponding records from the retransmission control information table, similarly as described above.

In a case where each initial value is set to "10" in the "remaining number of retransmissions" item of the retransmission control information table corresponding to the service for which the upper limit of the number of packet retransmissions is set to "10" in the distribution information table, the step S9 which decrements the value of the remaining number of retransmissions by one is not carried out after the step S8 which transmits the retransmitting packet. In this case, the above described process is repeated until there is no more packet to the registered under the "packet number" item, and when there is no more registered packet and the decision result in the step S7 becomes NO, the process ends.

According to the retransmission control with respect to each of the multicast information distribution services described above, the packet retransmission requests are intensively managed for each predetermined range of packet numbers within a predetermined time which is required to transmit the retransmission control information table a predetermined number of times, by the steps S1 through S6 shown in FIG. 6. Further, the packet which is requested by the retransmission requests which are intensively managed is retransmitted at a predetermined timing by the steps S6 through S8. In this case, both the plurality of retransmission request signals with respect to the same packet, and the plurality of retransmission request signals with respect to different packets, are intensively managed. For this reason, the number of packet retransmissions from the wireless base station 20 is reduced for the same multicast information distribution service, to thereby enable efficient utilization of the wireless resources and to reduce the processing load on the wireless base station 20.

On the other hand, each of the wireless terminals 10A, 10B and 10C within the service area ES for receiving the multicast information distribution services from the wireless base station 20 carries out the following process.

Generally, in the mobile communication system, the wireless base station 20 transmits a perch channel for enabling synchronization with respect to all of the wireless terminals 10A, 10B and 10C within the service area ES. The perch channel also has a function of notifying control information related to the mobile communication system to each of the wireless terminals 10A, 10B and 10C, and may further include information related to a channel structure such as specifying the channel to be used by each of the wireless terminals 10A, 10B and 10C.

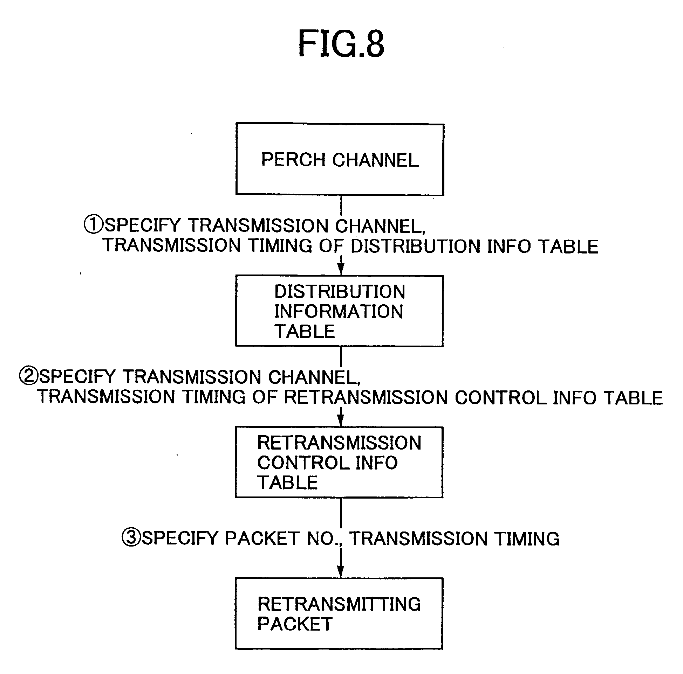

FIG. 8 is a diagram showing a relationship of various information to be received by a time when each of the wireless terminals 10A, 10B and 10C receives a retransmitted packet. In FIG. 8, the wireless terminal which receives a desired multicast information distribution service receives the perch channel, and receives the distribution information table shown in FIG. 4 according to information ① included in the perch channel. The information ① includes the transmission channel and the transmission timing of the distribution information table. When the wireless terminal receives the distribution information table, the wireless terminal receives the retransmission control information table shown in FIG. 5 corresponding to the desired multicast information service according to information ② included in the distribution information table. The information ② includes the transmission channel and the transmission period and timing of the retransmission control information table. Then, if there is a packet dropout, the wireless terminal receives the retransmission of the dropped out packet according to information ③ included in the retransmission control information table. The information ③ includes the packet number and the transmission timing. If the dropped out packet is not registered in the retransmission control information table, the wireless terminal outputs a retransmission request signal.

Based on such a procedure, each of the wireless terminals 10A, 10B and 10C receives the retransmission of the packet which dropped out. In a case where the transmission channel, the transmission timing and the like of the distribution information table successively change, each of the wireless terminals 10A, 10B and 10C receives the perch channel before receiving the distribution information table to confirm such changes. In addition, there are cases where the transmission channel, the transmission timing and the like of the information (multicast information distribution service, retransmission control information table, retransmitting packet) stored in the distribution information table shown in FIG. 4 change. Hence, in such cases, each of the wireless terminals 10A, 10B and 10C receives the distribution information table every time the distribution information table is transmitted from the wireless base station 20 while receiving the multicast information distribution service to confirm such changes. When the information such as the transmission channel and the transmission timing stored in the distribution information table and the retransmission control information table changes, the wireless base station 20 updates the contents of these tables before transmitting these tables.

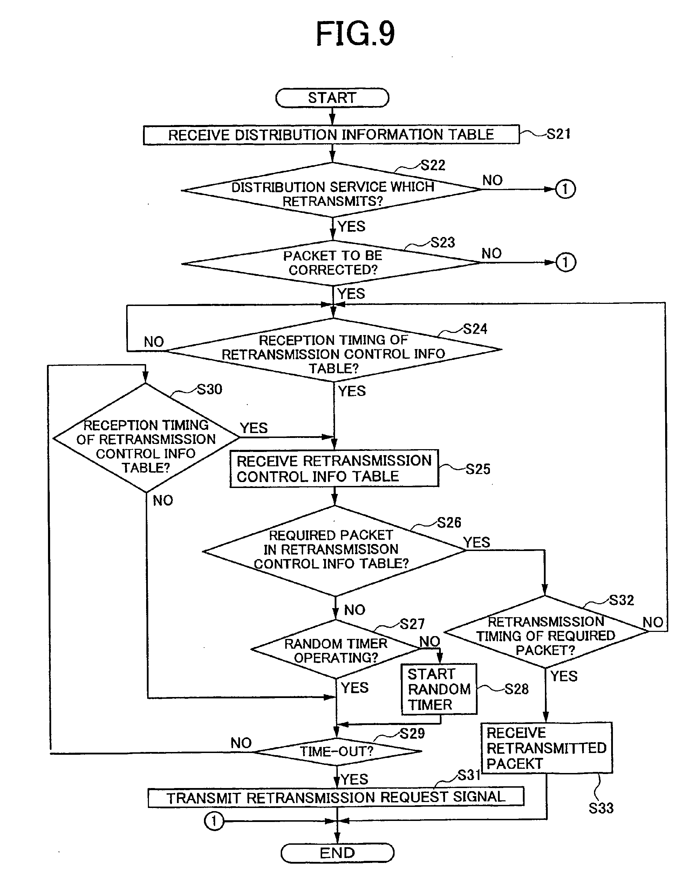

A more detailed description of the procedure carried out in each of the wireless terminals 10A, 10B and 10C which receives the multicast information distribution service will be given with reference to FIG. 9. FIG. 9 is a flow chart showing the process carried out at each of the wireless terminals 10A, 10B and 10C.

In FIG. 9, in each of the wireless terminals 10A, 10B and 10C which confirms a transmission channel and a transmission timing of the distribution information table by the perch channel as described above, a step S21 receives the distribution information table shown in FIG. 4 which is transmitted from the wireless base station 20 using the transmission channel and the transmission timing. Each of the wireless terminals 10A, 10B and 10C which receives the distribution information table refers to this distribution information table, and a step S22 decides whether or not the multicast information distribution service which is being received is the type of service which retransmits the packet. For example, the decision in the step S22 is made by determining whether or not the value of the item (retransmission control information table, retransmitting packet) in the distribution information table, related to the retransmission corresponding to the multicast information distribution service which is received by the wireless terminal, is set to "0". In the case of the multicast real-time video distribution service specified by the service information C in FIG. 4, for example, the step S22 judges that the multicast information distribution service which is being received is not the type of service which retransmits the packet.

If the decision result in the step S22 is YES, a step S23 decides whether or not a packet to be corrected exists in the packets received by the wireless terminal. If the decision result in the step S23 is YES, the wireless terminal in a step S24 refers to the distribution information table received by the step S21 and carries out a monitoring process. More particularly, the monitoring process of the step S24 decides whether or not the present timing is the reception timing of the retransmission control information table corresponding to the multicast information distribution service which is being received by the wireless terminal.

The retransmission control information table is distributed at the predetermined period from the predetermined reference timing, from the wireless base station 20, as described above with reference to the steps S3 and S4 shown in FIG. 6 and FIG. 7. If the decision result in the step S24 becomes YES in this state, a step S25 receives the retransmission control information table using the transmission channel which is stored in the item of the retransmission control information table in the distribution information table.

In a step S26, each of the wireless terminals 10A, 10B and 10C decides whether or not the packet which is to be corrected is already registered in the received retransmission control information table. If no retransmission request is made from the other wireless terminals with respect to the packet which is to be corrected in the wireless terminal and this packet is not yet registered in the retransmission control information table, the decision result in the step S26 is NO, and a step S27 decides whether or not a random timer is operating. Each of the wireless terminals 10A, 10B and 10C itself has a known basic structure, and this random timer may be an internal or external timer of a processor within each of the wireless terminals 10A, 10B and 10C. If the decision result in the step S27 is NO, a step S28 starts the operation of the random timer which is set with a random time which is peculiar to each of the wireless terminals 10A, 10B and 10C, and a monitoring process of steps S29 and S30 is then carried out. The step S29 decides whether or not a time-out of the random timer has occurred, and if the decision result in the step S29 is NO, the step S30 decides whether or not the present timing is a next reception timing of the retransmission control information table, by referring to the distribution information table. The process returns to the step S29 if the decision result in the step S30 is NO.

If the decision result in the step S30 is YES, the step S25 receives the retransmission control information table using the transmission channel which is stored in the distribution information table, and the step S26 decides whether or not there is a registered packet which is to be corrected in the received retransmission control information table. If the decision result in the step S26 is NO, the monitoring process including the step S29 which checks the time-out of the random timer which is operating and the step S30 which checks the next reception timing of the retransmission control information table, is repeated.

Thereafter, while the monitoring process which checks the time-out of the random timer and checks the next reception timing of the retransmission control information table is repeated, the step S25 receives the retransmission control information table every time the decision result in the step S30 becomes YES, and the step S26 confirms whether or not the packet which is to be corrected is registered in the received transmission information table. While such a process is being carried out, if no retransmission request is made from the other wireless terminals with respect to the packet which is to be corrected, the packet which is to be corrected is not registered in the received retransmission control information table and the time-out of the random timer occurs, the decision result in the step S29 becomes YES. Hence, in a step S31, each of the wireless terminals 10A, 10B and 10C transmits to the wireless base station 20 a retransmission request with respect to the packet which is to be corrected, and the retransmission control ends.

When the retransmission request is received by the wireless base station 20, the packet which is to be corrected is registered in the retransmission control information table corresponding to the multicast information distribution service which is received by each of the wireless terminals 10A, 10B and 10C, as described above in conjunction with FIG. 5 and the steps S1 and S2 shown in FIG. 6.

On the other hand, every time the reception timing of the retransmission control information table comes and the decision result in the step S30 becomes YES, the step S25 receives the retransmission control information table. When the step S26 confirms whether or not the packet which is to be corrected is registered in the received retransmission control information table, if a retransmission request with respect to the packet which is to be corrected is made from at least one of the other wireless terminals and the packet which is to be corrected is registered in the received retransmission control information table, the decision result in the step S26 becomes YES. Hence, in this case, a step S32 decides whether or not the present timing is the retransmission timing of the packet which is to be corrected. The decision in the step S32 may be made by determining whether or not the records corresponding to the range of packet numbers including the packet which is to be corrected is positioned at the uppermost row of the received retransmission control information table, and whether or not the value of the "transmission timing" item in the records is "0".

If the present timing is not the retransmission timing for the packet and the decision result in the step S32 is NO, the step S24 decides whether or not the present timing is the reception timing of the retransmission control information table. When the decision result in the step S24 becomes YES, the step S25 receives the retransmission control information table, and the step S26 decides whether or not the packet which is to be corrected is registered in the received retransmission control information table. If the decision result in the step S26 becomes YES, the step S32 decides whether or not the present timing is the retransmission timing of the packet which is to be corrected. Thereafter, the decision result in the step S24 becomes YES every time the present timing becomes the retransmission timing of the packet which is to be corrected, the step S25 receives the retransmission control information table, the decision result in the step S26 becomes YES if the packet which is to be corrected is registered in the received retransmission control information table, and the step S32 decides whether or not the present timing is the retransmission timing of the packet which is to be corrected.

When the present timing becomes the retransmission timing of the packet which is to be corrected and the decision result in the step S32 becomes YES, a step S33 receives the retransmitted packet which is retransmitted from the wireless base station 20 as described above by the step S8 shown in FIG. 6, using the transmission channel of the retransmitting packet for the multicast information distribution service which is stored in the distribution information table. The retransmission control ends after the step S33.

In the case where the retransmission request signal is transmitted by the step S31 as described above, the packet which is to be corrected is already registered in the received retransmission control information table when the retransmission control is carried out according to the procedure described above. Hence, the decision result in the step S26 is YES, and when the present timing becomes the retransmission timing of the packet and the decision result in the step S32 becomes YES, the step S33 receives the packet which is requested by the retransmission request signal.

When carrying out the above described process in each of the wireless terminals 10A, 10B and 10C, if there is a packet which is to be corrected and this packet is registered in the retransmission control information table in response to a retransmission request from another wireless terminal which receives the same multicast information distribution service, before the time-out of the random timer occurs, the transmission from the wireless terminal is discontinued because the decision result in the step S26 becomes YES. Hence, the wireless terminal can receive the packet which is to be corrected and is received from the wireless base station 20 at the retransmission timing stored in the retransmission control information table. Therefore, it is possible to efficiently utilize the wireless resources for the packet retransmission.

In the above described case, an upper limit value of the value which is set in the random timer which is used by the process of each of the wireless terminals 10A, 10B and 10C is determined based on a time until the retransmitting packet is transmitted, that is, a period T shown in FIG. 7. Consequently, each of the wireless terminals 10A, 10B and 10C can transmit the retransmission request signal before the transmission timing of the retransmission packet.

For example, suppose that the upper limit value of the random timer is described in units of frames. The value of the "transmission timing" item in the retransmission control information table shown in FIG. 5 is described in units of the number of transmissions of the retransmission control information table. Thus, a value which is obtained by multiplying the value of the "transmission timing" and the value of the "transmission period" of the "transmission period and timing" item in the retransmission control information table, becomes the upper limit value of the value which is set in the random timer. For example, the value of the "transmission timing" is "4" for the range of packet numbers "51" to "100". In addition, the value of the "transmission period" is "10" in the case of the multicast text distribution service specified by the service information A.

In the described embodiment, the information distribution control unit 23 which includes the retransmission controller 23a, is provided within the wireless base station 20 which forms an information distribution apparatus. However, the structure of the mobile communication system is not limited to such a structure, and for example, in a case where the information distribution apparatus is provided externally to the wireless base station 20, the information distribution control unit 23 may also be provided externally to the wireless base station 20.

Moreover, in the described embodiment, the wireless base station 20 forms an information distribution apparatus, the information distribution control unit 23 including the retransmission controller 23a forms a retransmission control apparatus. The retransmission control information table shown in FIG. 5 forms retransmission information and a managing means.

The process of the steps S27, S28, S29 and S30 shown in FIG. 9 is carried out by a (first) retransmission control means. The process of the steps S24, S25, S26, S32 and S33 shown in FIG. 9 is carried out by a (first) retransmission control means. The process of the steps S3 and S4 shown in FIG. 6 is carried out by a retransmission information transmission control means. The process of the steps S6, S7 and S8 shown in FIG. 6 is carried out by a (second) retransmission control means.

The process of the steps S1, S2, S3 and S6 shown in FIG. 6 is carried out by a distribution information managing means. In addition, the transmission control of the perch channel by the wireless base station 20 is carried out by a (second) retransmission control means. The process of setting the remaining number of packet retransmissions in the retransmission control information table shown in FIG. 5 is carried out by a retransmission control information managing means.

In the embodiment described above, two kinds of tables, namely, the distribution information table and the retransmission control information table, are used. However, the information stored in the two kinds of tables is of course not limited to that shown in FIGS. 4 and 5. Furthermore, it is not an essential condition to use the tables in the present invention.

In other words, a wireless base station BS only needs to have a structure such that, when a retransmission request is received from an arbitrary wireless terminal MS1 within a service area SA, the wireless base station BS notifies retransmission information which indicates that information I was requested by the retransmission request, to the wireless terminal MS1 and each of other wireless terminals MS2 through MSn within the same service area SA. In addition, the wireless base station BS only needs to have a structure such that, the information I requested by the retransmission request is retransmitted to each of the wireless terminals MS1 through MSn within the service area SA at a timing which may be set arbitrarily. Furthermore, the wireless base station BS may have a structure so as to cope with one retransmission of the information I with respect to a plurality of retransmission requests which request the information I if the retransmission request requesting the same information I is received from one or more of the wireless terminals MS1 through MSn (for example, the wireless terminal MS2) within the service area SA before the information I is retransmitted to each of the wireless terminals MS1 through MSn within the service area SA. For example, the wireless base station BS copes with one retransmission of the information I with respect to the retransmission requests from the wireless terminals MS1 and MS2.

On the other hand, each of the wireless terminals MS1 through MSn only needs to have a structure such that, a retransmission request is made with respect to the wireless base station BS when the information I which requires retransmission is generated, and discontinues transmission of the retransmission request for the information I when notified of retransmission information which indicates that a retransmission request for the same information I is made from another wireless terminal within the service area SA at a timing before the retransmission request is made.

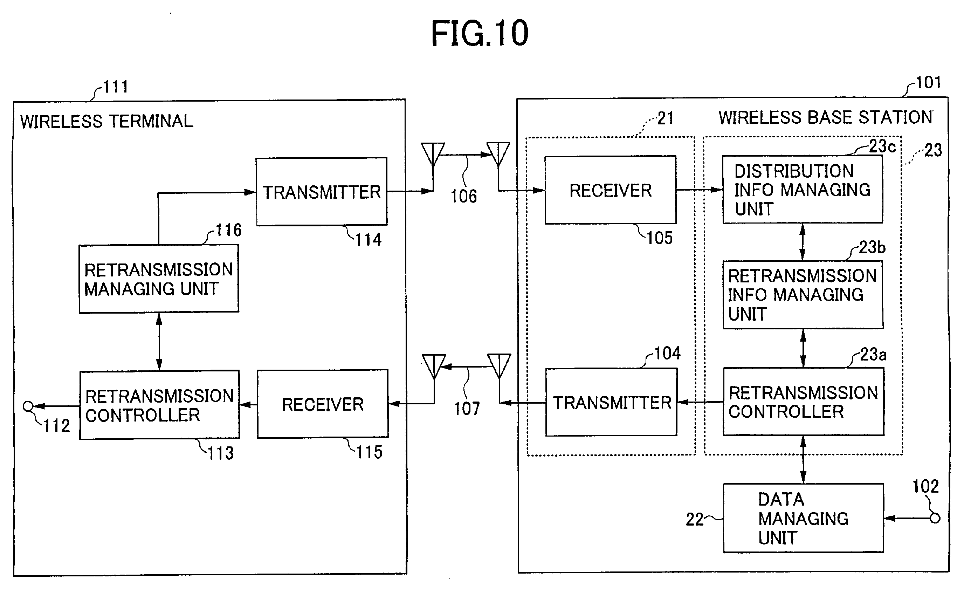

Next, a description will be given of a second embodiment of a retransmission control method for multicast information distribution service according to the present invention. A mobile communication system to which this second embodiment of the retransmission control method is applied has a structure shown in FIG. 10. This second embodiment of the retransmission control method employs a second embodiment of the retransmission control system according to the present invention, a second embodiment of the retransmission control apparatus according to the present invention, a second embodiment of the wireless base station according to the present invention, and a second embodiment of the wireless terminal according to the present invention. In FIG. 10, those parts which are the same as those corresponding parts in FIG. 3 are designated by the same reference numerals

The mobile communication system includes a wireless base station 101 and a wireless terminal 111 as shown in FIG. 10, and a plurality of wireless terminals 111 exist within the same service area SA. The wireless base station 101 includes an input end 102 which receives multicast information via a network (not shown), a transmitter and receiver unit 21, a data managing unit 22, and an information distribution control unit 23. The transmitter and receiver unit 21 includes a transmitter 104 and a receiver 105. The information distribution control unit 23 includes a distribution information managing unit 23c, a retransmission control information managing unit 23b, and a retransmission controller 23a. On the other hand, the wireless terminal 111 includes an output end 112 for outputting the multicast information and supplying the multicast information to other parts (not shown) of the wireless terminal 111, a retransmission controller 113, a transmitter 114, a receiver 115, and a transmission timing managing unit 116. The data managing unit 22 and the information distribution control unit 23, or at least the retransmission controller 23a, may have a known basic structure made up of a processor such as a CPU and a memory. In addition, the retransmission controller 113 and the transmission timing managing unit 116, or at least the retransmission controller 113, may have a known basic structure made up of a processor such as a CPU and a memory.

In the wireless base station 101, the multicast information received from the input end 102 is supplied to the data managing unit 22. The retransmission controller 23a divides the multicast information into units of slots, and adds an error detecting code such as CRC so that an error can be detected in units of slots, before supplying the multicast information to the transmitter 104. The transmitter 104 modulates the multicast information from the retransmission controller 23a and transmits multicast information 107 to each wireless terminal 111 within the service area SA.

At each wireless terminal 111 within the service area SA, the receiver 115 receives and demodulates the multicast information 107 before supplying the multicast information to the retransmission controller 113. When an error exists in the received multicast information 107, the retransmission controller 113 supplies a retransmission request to the transmitter 114 at a transmission timing managed by the transmission timing managing unit 116. The retransmission request is received by the receiver 105 of the wireless base station 101 via an up-channel 106. When no error exists in the received multicast information 107, the retransmission controller 113 receives the next multicast information 107 without outputting a retransmission request.

The receiver 105 of the wireless base station 101 supplies the signal received via the up-channel 106 to the retransmission controller 23a via the distribution information managing unit 23c and the retransmission control information managing unit 23b. When the retransmission request is received, the retransmission controller 23a temporarily discontinues transmission of the multicast information which is received via the input end 102 from being transmitted from the transmitter 104, at an arbitrarily set timing, under the management of the distribution information managing unit 23c, and retransmits the multicast information requested by the retransmission request to each of the wireless terminals 111 within the service area SA. The retransmission controller 23a transmits the next multicast information from the transmitter 104 if no retransmission request is received.

When a retransmission request is received from an arbitrary wireless terminal 111 within the service area SA, the retransmission controller 23a of the wireless base station 101 distributes retransmission information to each wireless terminal 111 within the service area SA via the transmitter 104, at an arbitrarily set timing, under the management of the retransmission control information managing unit 23b. The retransmission information includes at least information which indicates the multicast information requested by the retransmission request, such as the packet number.

At the wireless terminal 111 which receives the retransmission information, the retransmission controller 113 discontinues transmission of the retransmission request, even when the transmission timing therefor managed by he transmission managing unit 116 is reached, if the information requested by the retransmission request which is to be transmitted matches the information indicated by the received retransmission information. Hence, in this case, this wireless terminal 111 waits until the requested information is received from the wireless base station 101.

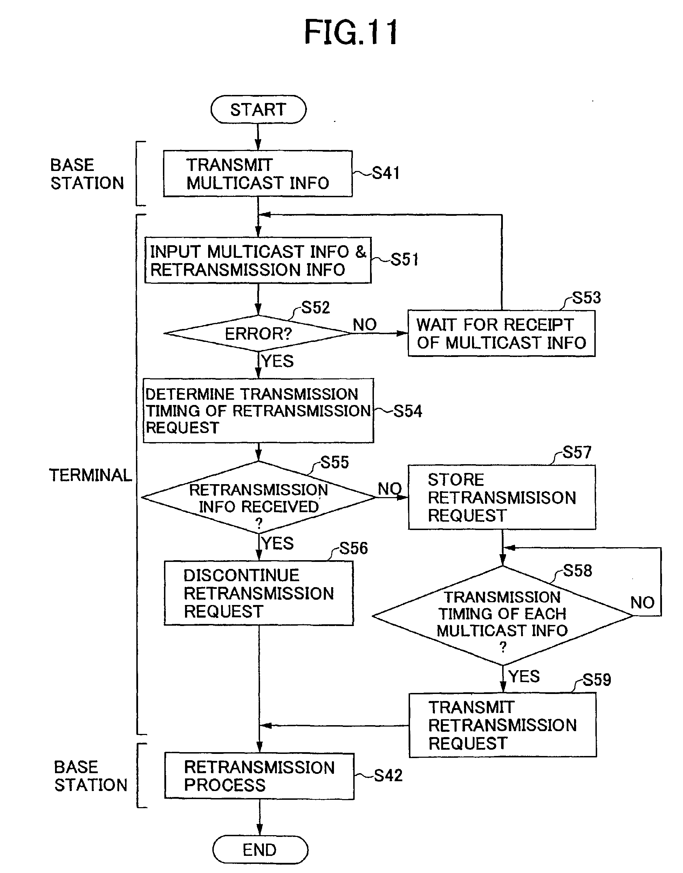

FIG. 11 is a flow chart for explaining the operations of the wireless base station 101 and the wireless terminal 111 of this second embodiment. FIG. 11 corresponds to the processes carried out by the processor which forms the retransmission controller 23a of the wireless base station 101 and the processor which forms the retransmission controller 113 of the wireless terminal 111.

In FIG. 11, in the wireless base station 101, a step S41 transmits the multicast information to each wireless terminal 111 within the service area SA via the transmitter 104, as described above.

Steps S51 through S59 are carried out at each wireless terminal 111 within the service area SA. The step S51 inputs the multicast information and/or the retransmission information received via the receiver 115 to the retransmission controller 113. The step S52 decides whether or not an error exists in the received multicast information. If the decision result in the step S52 is NO, the step S53 waits for the next multicast information, and the process returns to the step S51. On the other hand, if the decision result in the step S52 is YES, a step S54 determines the transmission timing of the retransmission request signal by the retransmission timing managing unit 116. The step S55 decides whether or not the information which indicates the multicast information such as the packet number and is included in the retransmission information as being planned for retransmission, matches the information which is managed by the transmission timing managing unit 116 and indicates the multicast information such as the packet number and is planned to be requested by the wireless terminal 111 by the in the retransmission request signal. If the decision result in the step S55 is YES, the step S56 discontinues the transmission of the retransmission request signal.

If the decision result in the step S55 is NO, the step S57 stores the retransmission request signal in the memory within the retransmission controller 113. The step S58 decides whether or not the transmission timing which is managed by the transmission timing managing unit 116 for each multicast information is reached. If the decision result in the step S58 is YES, the step S59 transmits the retransmission request signal via the transmitter 114 to the wireless base station 101 under the management of the transmission timing managing unit 116.

In the wireless base station 101, a step S42 carries out a retransmission process when the retransmission request signal is received from one or more wireless terminals 111 within the service area SA.

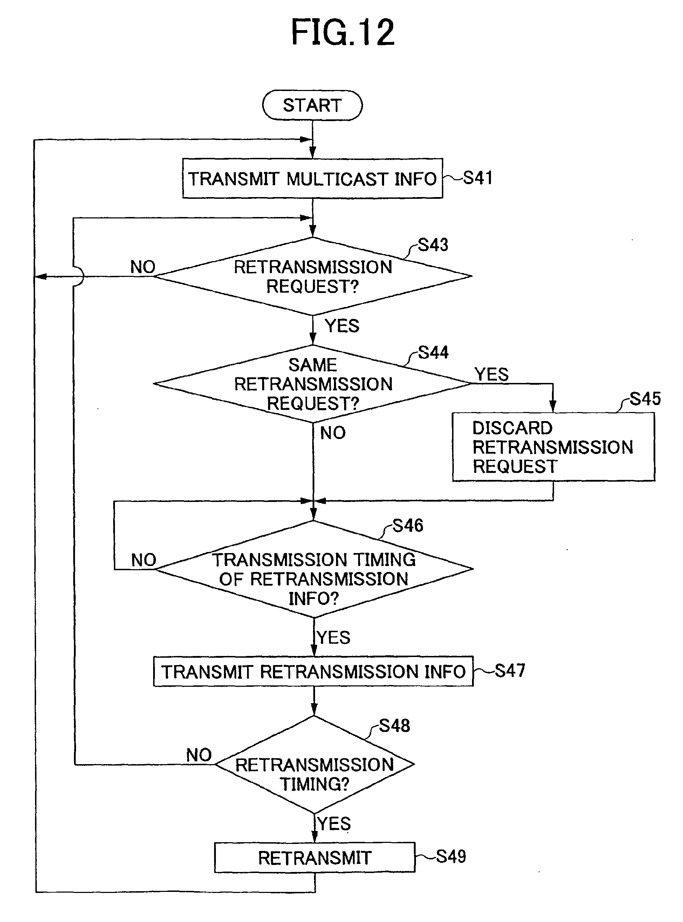

FIG. 12 is a flow chart for explaining the operation of the wireless base station 101 of this second embodiment in mode detail. The process shown in FIG. 12 corresponds to the process which is carried out by the processor which forms the retransmission controller 23a of the wireless base station 101.

In FIG. 12, the step S41 transmits the multicast information to each wireless terminal 111 within the service area SA via the transmitter 104, under the management of the distribution information managing unit 23c. A step S43 decides whether or not the retransmission request signal from the wireless terminal 111 within the service area SA is received via the receiver 105. If the decision result in the step S32 is NO, the process returns to the step S41. If the decision result in the step S43 is YES, a step S44 decides, based on the information managed by the distribution information managing unit 23c and the retransmission control information managing unit 23b, whether or not a retransmission request signal requesting the multicast information requested by the received retransmission request signal is already accepted and the requested multicast information is not yet retransmitted. If the decision result in the step S44 is YES, a step S45 discards the retransmission request signal requesting the same multicast information.

If the decision result in the step S44 is NO or, after the step S45, a step S46 decides, based on the information managed by the retransmission control information managing unit 23b, whether or not the arbitrarily set transmission timing of the retransmission information is reached. If the decision result in the step S46 is YES, a step S47 transmits the retransmission information to each wireless terminal 111 within the service area SA via the transmitter 104. A step S48 decides, based on the information managed by the distribution information managing unit 23c, whether or not the arbitrarily set retransmission timing for the multicast information which is requested by the accepted retransmission request signal is reached. The process returns to the step S43 if the decision result in the step S48 is NO. On the other hand, if the decision result in the step S48 is YES, a step S49 retransmits the multicast information which is requested by the accepted retransmission request signal, to each wireless terminal 111 within the service area SA via the transmitter 104, and the process returns to the step S41.

Of the means forming the wireless base station 101, the steps S44, S45, S46 and S47 shown in FIG. 12 in particular correspond to a notifying means. In addition, the steps S48 and S49 in particular correspond to a retransmitting means.

In addition, of the means forming the wireless terminal 111, the steps S54 and S57 through S59 shown in FIG. 11 in particular correspond to a retransmission request means. Moreover, the steps S55 and S56 in particular correspond to a control means.

## Claims

1. A retransmission control method for a multicast information distribution service which distributes multicast information (A, B, C) with respect to a plurality of wireless terminals (10A, 10B, 10C, 111) within a service area (ES) from an information distribution apparatus (20) via a wireless region, **characterized by** comprising the steps of:
(a) transmitting a retransmission request for information which requires retransmission, from an arbitrary wireless terminal to the information distribution apparatus, at a timing determined by the wireless terminal when the information which requires retransmission is generated;
(b) after receiving the retransmission request for the information from the arbitrary wireless terminal within the service area, notifying retransmission information indicating the information requested by the retransmission request with respect to each of the wireless terminals within the service area from the information distribution apparatus, and retransmitting the information requested by the retransmission request from the information distribution apparatus at a predetermined timing; and
(c) making no retransmission request for the information from each of the wireless terminals if the retransmission information is received by each of the wireless terminals before the predetermined timing, and each of the wireless terminals receives the information retransmitted from the information distribution apparatus at the predetermined timing.

2. The retransmission control method for the multicast information distribution service as claimed in claim 1, further comprising the step of:
(d) intensively managing in the information distribution apparatus retransmission requests for the same information made with respect to the same multicast information distribution service until the predetermined timing, and retransmitting from the information distribution apparatus information related to intensively managed retransmission requests at the predetermined timing.

3. The retransmission control method for the multicast information distribution service as claimed in claim 1, further comprising the steps of:
(d) including information related to the predetermined timing at which the information requested by the retransmission request is retransmitted in the retransmission information, and notifying each of the wireless terminals within the service area from the information distribution apparatus information related to a transmission channel and a transmission timing for notifying the retransmission information and information related to a transmission channel for retransmitting the information requested by the retransmission request; and
(e) receiving the retransmission information by each of the wireless terminals within the service area based on the information which is received from the information distribution apparatus and is related to the transmission channel and the transmission timing for notifying the retransmission information, and receiving the information retransmitted from the information distribution apparatus based on the information related to the transmission channel for retransmitting the information and the information related to the predetermined timing included in the retransmission information which are received from the information distribution apparatus.

4. The retransmission control method for the multicast information distribution service as claimed in claim 1, further comprising the step of:
(d) managing the information requested by the retransmission request in categories according to a predetermined rule, and managing timings for retransmitting the information for each of the categories, in the information distribution apparatus.

5. The retransmission control method for the multicast information distribution service as claimed in claim 1, further comprising the step of:
(d) controlling an upper limit value of a number of retransmissions of the information requested by the retransmission request depending on the multicast information which is distributed from the information distribution apparatus.

6. A retransmission control system (101, 111) for a multicast information distribution service which distributes multicast information with respect to a plurality of wireless terminals within a service area from an information distribution apparatus via a wireless region, **characterized by** comprising:
timing determination means (116), in each wireless terminal, for determining a timing at which a retransmission request for information which requires retransmission is to be transmitted when the information which requires retransmission is generated;
first retransmission control means (113), in each wireless terminal, for transmitting the retransmission request for the information with respect to the information distribution apparatus at the timing determined by said timing determination means;
retransmission control information managing means (23b), in the information distribution apparatus, for managing retransmission information indicating the information requested by the retransmission request after receiving the retransmission request for the information from an arbitrary wireless terminal within the service area; and
second retransmission control means (23a), in the information distribution apparatus, for transmitting information related to the retransmission request indicated by the retransmission information to each wireless terminal within the service area at a predetermined timing,
wherein each wireless terminal makes no retransmission request for the information by the first retransmission control means if the retransmission information is received before the timing determined by said timing determination means, and each wireless terminal receives the information retransmitted from the information distribution apparatus at the predetermined timing.

7. The retransmission control system for the multicast information distribution service as claimed in claim 6, further comprising:
distribution information managing means (23c), in the information distribution apparatus, for intensively managing retransmission requests for the same information made with respect to the same multicast information distribution service until the predetermined timing,
said second retransmission control means retransmitting information related to the retransmission requests intensively managed by said distribution information managing means at the predetermined timing.

8. The retransmission control system for the multicast information distribution service as claimed in claim 6, wherein:
information which is related to the predetermined timing at which the information requested by the retransmission request is retransmitted, is included in the retransmission information,
said information distribution apparatus notifies each of the wireless terminals within the service area information related to a transmission channel and a transmission timing for notifying the retransmission information and information related to a transmission channel for retransmitting the information requested by the retransmission request, by the second retransmission control means, and
said first retransmission control means in each wireless terminal receives the retransmission information based on the information which is received from the information distribution apparatus and is related to the transmission channel and the transmission timing for notifying the retransmission information, and receives the information retransmitted from the information distribution apparatus based on the information related to the transmission channel for retransmitting the information and the information related to the predetermined timing included in the retransmission information which are received from the information distribution apparatus.

9. The retransmission control system for the multicast information distribution service as claimed in claim 6, further comprising:
managing means (22), in the information distribution apparatus, for managing the information requested by the retransmission request in categories according to a predetermined rule, and managing timings for retransmitting the information for each of the categories.

10. The retransmission control system for the multicast information distribution service as claimed in claim 6, further comprising:
retransmission control information managing means, in the information distribution apparatus, for managing an upper limit value of a number of retransmissions of the information requested by the retransmission request depending on the multicast information which is distributed from the information distribution apparatus.

11. A wireless terminal which receives multicast information distributed from an information distribution apparatus via a wireless region, and receives information retransmitted from the information distribution apparatus according to a transmission control, **characterized by** comprising:
timing determination means for determining a timing for transmitting a retransmission request for information which requires retransmission; and
retransmission control means for transmitting the retransmission request for the information with respect to the information distribution apparatus at the timing determined by said timing determination means,
said retransmission control means making no retransmission request for the information if the retransmission information is received before the timing determined by said timing determination means, and receiving the information retransmitted from the information distribution apparatus after the timing determined by said timing determination means.

12. The wireless terminal as claimed in claim 11, wherein:
information which is related to the predetermined timing at which the information requested by the retransmission request is retransmitted, is included in the retransmission information, and
said retransmission control means receives the retransmission information based on the information which is received from the information distribution apparatus and is related to the transmission channel and the transmission timing for notifying the retransmission information, and receives the information retransmitted from the information distribution apparatus based on the information related to the transmission channel for retransmitting the information and the information related to the predetermined timing included in the retransmission information which are received from the information distribution apparatus.

13. The wireless terminal as claimed in claim 11, wherein:
said retransmission control means transmits the retransmission request when predetermined information which requires retransmission is generated, and discontinues transmission of the retransmission request for the predetermined information when notified of retransmission information which indicates that a retransmission request for the predetermined information is made from another wireless terminal within the wireless region at a timing before said retransmission control means makes the retransmission request.

## Patentansprüche

1. Ein Wiederübertragungssteuerverfahren für einen Multicast-Informationsverteilungsservice, welcher eine Multicast-Information (A, B, C) in Bezug auf eine Vielzahl von Drahtlos-Endgeräten (10A, 10B, 10C, 111) innerhalb eines Servicebereichs (ES) von einer Informationsverteilungsvorrichtung (20) über einen Drahtlosbereich verteilt, **gekennzeichnet durch** das Aufweisen der Schritte von:
(a) Übertragen einer Wiederübertragungsanforderung von einer Information, welche des Wiederübertragens bedarf, von einem beliebigen Drahtlos-Endgerät an die Informationsverteilungsvorrichtung zu einem Timing, welches von dem Drahtlos-Endgerät bestimmt wird, wenn die Information gebildet wird, welche des Wiederübertragens bedarf;
(b) Mitteilen der Wiederübertragungsinformation von der Informationsverteilungsvorrichtung, wobei die Wiederübertragungsinformation die Information indiziert, welche mittels der Wiederübertragungsanforderung mit Bezug auf jedes der Drahtlos-Endgeräte innerhalb des Servicebereichs angefordert wurde, nach dem Empfangen der Wiederübertragungsanforderung von der Information von dem beliebigen Drahtlos-Endgerät innerhalb des Servicebereichs, und
Wiederübertragen der Information, welche von der Wiederübertragungsanforderung angefragt worden ist, von der Informationsverteilvorrichtung zu einem bestimmten Timing; und
(c) Nichtdurchführen einer Wiederübertragungsanforderung von der Information von jedem der Drahtlos-Endgeräte, wenn die Wiederübertragungsinformation von jedem der Drahtlos-Endgeräte vor dem vorbestimmten Timing empfangen wird, und jedes der Drahtlos-Endgeräte die Information empfängt, welche von der Informationsverteilungsvorrichtung zu dem vorbestimmten Timing wiederübertragen wird.

2. Das Wiederübertragungssteuerverfahren für den Multicast-Informationsverteilungsservice, wie in Anspruch 1 beansprucht, weiter aufweisend den Schritt des:
(d) intensives Managen, in der Informationsverteilungsvorrichtung, der Wiederübertragungsanforderungen von derselben Information, welche in Bezug auf denselben Multicast-Informationsverteildienst bis zu dem vorbestimmten Timing gemacht werden, und Wiederübertragen der Information von der Informationsverteilvorrichtung, wobei sich die Information auf intensiv gemanagte Wiederübertragungsanforderungen zu dem vorbestimmten Timing bezieht.

3. Das Wiederübertragungssteuerverfahren für den Multicast-Informationsverteilungsservice, wie in Anspruch 1 beansprucht, weiter aufweisend den Schritt des:
(d) Einfügen von einer Information, welche sich auf das vorbestimmte Timing bezieht, zu dem die Information, welche von der Wiederübertragungsanforderung angefordert wurde, wiederübertragen wird, in die Wiederübertragungsinformation, und mitteilen der Information einem jeden der Drahtlos-Endgeräte innerhalb des Servicebereichs von der Informationsverteilvorrichtung, wobei sich die Information auf einen Übertragungskanal und ein Übertragungstiming für das Mitteilen der Wiederübertragungsinformation bezieht, und der Information, welche sich auf einen Übertragungskanal für das Wiederübertragen der Information bezieht, welche mittels der Wiederübertragungsanforderung angefordert wurde; und
(e) Empfangen der Wiederübertragungsinformation von jedem der Drahtlos-Endgeräte innerhalb des Servicebereichs basierend auf der Information, welche von der Informationsverteilungsvorrichtung empfangen wird und welche sich auf den Übertragungskanal und das Übertragungstiming zum Mitteilen der Wiederübertragungsinformation bezieht, und
Empfangen der Information, welche von der Informationsverteilvorrichtung wiederübertragen wird, basierend auf der Information, welche sich auf den Übertragungskanal für das Wiederübertragen der Information bezieht, und der Information, welche sich auf das vorbestimmte Timing bezieht, eingefügt in der Wiederübertragungsinformation, welche von der Informationsverteilungsvorrichtung empfangen werden.

4. Das Wiederübertragungssteuerverfahren für den Multicast-Informationsverteilungsservice, wie in Anspruch 1 beansprucht, weiter aufweisend den Schritt des:
(d) Managen der Information, die von der Wiederübertragungsanforderung angefordert wurde, in Kategorien gemäß einer vorbestimmten Regel, und Managen der Timings für das Wiederübertragen der Information für jede der Kategorien in der Informationsverteilungsvorrichtung.

5. Das Wiederübertragungssteuerverfahren für den Multicast-Informationsverteilservice, wie in Anspruch 1 beansprucht, weiter aufweisend den Schritt des:
(d) Steuern eines oberen Grenzwerts von einer Anzahl von Wiederübertragungen der Information, welche mittels der Wiederübertraganforderung angefordert wurde, abhängig von der Multicast-Information, welche von der Informationsverteilungsvorrichtung verteilt wird.

6. Ein Wiederübertragungssteuersystem (101, 111) für einen Multicast-Informationsverteilungsservice, welches eine Multicast-Information in Bezug auf eine Vielzahl von Drahtlos-Endgeräten innerhalb eines Servicebereichs von einer Informationsverteilungsvorrichtung über einen Drahtlosbereich verteilt, **gekennzeichnet**, indem es aufweist:
ein Timing-Bestimmungsmittel (116), in jedem Drahtlos-Endgerät, zum Bestimmen eines Timings, zu welchem eine Wiederübertragungsanforderung von Information übertragen werden soll, welche des Wiederübertragens bedarf, wenn die Information gebildet wird, welche des Wiederübertragens bedarf;
ein erstes Wiederübertragungssteuermittel (113), in jedem Drahtlos-Endgerät, zum Übertragen der Wiederübertragungsanforderung von der Information in Bezug auf die Informationsverteilungsvorrichtung, zu dem Timing, welches von dem Timing-Bestimmungsmittel bestimmt wurde;
ein Wiederübertragungssteuerinformationsmanagementmittel (23b), in der Informationsverteilungsvorrichtung, zum Managen von Wiederübertragungsinformation, die die von der Wiederübertragungsanforderung angeforderte Information indiziert, nach dem Empfangen der Wiederübertragungsanforderung von der Information von einem beliebigen Drahtlas-Endgerät innerhalb des Servicebereichs; und
ein zweites Wiederübertragungssteuermittel (23a), in der Informationsverteilungsvorrichtung, zum Übertragen von Information, die sich auf die Wiederübertragungsanforderung bezieht, indiziert durch die Wiederübertragungsinformation, an jedes Drahtlos-Endgerät innerhalb des Servicebereichs zu einem vorbestimmten Timing,
wobei jedes Drahtlos-Endgerät keine Wiederübertragungsanforderung von der Information mit dem ersten Wiederübertragungssteuermittel durchführt, wenn die Wiederübertragungsinformation vor dem Timing empfangen wird, welches von dem Timing-Bestimmungsmittel bestimmt worden ist, und
jedes Drahtlos-Endgerät die Information empfängt, welche von der Informationsverteilungsvorrichtung zu dem vorbestimmten Timing wiederübertragen wird.

7. Das Wiederübertragungssteuersystem für den Multicast-Informatiansverteilungsservice, wie in Anspruch 6 beansprucht, weiter aufweisend:
ein Verteilinformationsmanagementmitttel (23c), in der Informationsverteilungsvorrichtung, zum intensiven Managen der Wiederübertragungsanforderungen von derselben Information, welche mit Bezug auf denselben Multicast-Informationsverteilungsservice bis zu dem vorbestimmten Timing gemacht werden,
wobei das zweite Wiederübertragungssteuermittel eine Information wiederüberträgt, welche sich auf die Wiederübertragungsanforderungen bezieht, intensiv von dem Verteilinformationsmanagementmittel gemanagt zu dem vorbestimmten Timing.

8. Das Wiederübertragungssteuersystem für den Multicast-Informationsverteilungsservice, wie in Anspruch 6 beansprucht, wobei:
eine Information in die Wiederübertragungsinformation eingefügt wird, welche sich auf das vorbestimmte Timing bezieht, zu dem die Information wiederübertragen wird, welche von der Wiederübertragungsanforderung angefordert wurde,
wobei die Informationsverteilvorrichtung jedem der Drahtlos-Endgeräte innerhalb des Servicebereichs eine Information mittels der zweiten Wiederübertragungssteuermittel mitteilt, welche sich auf einen Übertragungskanal und ein Übertragungstiming zum Mitteilen der Wiederübertragungsinformation bezieht, und eine Information, welche sich auf einen Übertragungskanal zum Wiederübertragen der Information bezieht, welche von der Wiederübertragungsanforderung angefordert wurde, und
wobei das erste Wiederübertragungssteuermittel in jedem Drahtlos-Endgerät die Wiederübertragungsinformation empfängt, basierend auf der Information, welche von der Informationsverteilungsvorrichtung empfangen wird, und, welche sich auf den Übertragungskanal und das Übertragungstiming bezieht, zum Mitteilen der Wiederübertragungsinformation, und
die Information empfängt, welche von der Informationsverteilungsvorrichtung wiederübertragen wird, basierend auf der Information, welche sich auf den Übertragungskanal zum Wiederübertragen der Information bezieht, und der Information, welche sich auf das vorbestimmte Timing bezieht, eingefügt in der Wiederübertragungsinformation, welche von der Informationsverteilungsvorrichtung empfangen werden.

9. Das Wiederübertragungssteuersystem für den Multicast-Informationsverteilungsservice, wie in Anspruch 6 beansprucht, weiter aufweisend:
ein Managementmittel (22) in der Informationsverteilungsvorrichtung, zum Managen der Information, die von der Wiederübertragungsanforderung angefordert wurde, in Kategorien gemäß einer vorbestimmten Regel, und zum Managen des Timings für das Wiederübertragen der Information für jede der Kategorien.

10. Das Wiederübertragungssteuersystem für den Multicast-Informationsverteilungsservice, wie in Anspruch 6 beansprucht, weiter aufweisend:
ein Wiederübertragungssteuerinformationsmanagementmittel, in der Informationsverteilungsvorrichtung, zum Managen eines oberen Grenzwertes für eine Anzahl von Wiederübertragungen der Information, welche von der Wiederübertragungsanforderung angefordert wurde, abhängig von der Multicast-Information, welche von der Informationsverteilungsvorrichtung verteilt wird.

11. Ein Drahtlos-Endgerät, welches eine Multicast-Information empfängt, die von einer Informationsverteilungsvorrichlung über einen Drahtlosbereich verteilt wird, und welches eine Information empfängt, die von der Informationsverteilungsvorrichtung gemäß einer Übertragungssteuerung wiederübertragen wird, **gekennzeichnet durch** das Aufweisen von:
ein Timing-Bestimmungsmittel zum Bestimmen eines Timings für das Übertragen einer Wiederübertragungsanforderung von Information, welche des Wiederübertragens bedarf; und
ein Wiederübertragungssteuermittel zum Übertragen der
Wiederübertragungsanforderung von der Information in Bezug auf die Informationsverteilungsvorrichtung zu einem Timing, welches von dem Timing-Bestimmungsmittel bestimmt wird,
wobei das Wiederübertragungssteuermittel keine Wiederübertragungsanforderung von der Information durchführt, wenn die Wiederübertragungsinformation vor dem Timing empfangen wird, welches von dem Timing-Bestimmungsmittel bestimmt wird, und nach dem Timing, welches von dem Timing-Bestimmungsvorrichtung bestimmt wird, die Information empfängt, welche von der Informationsverteilungsvorrichtung wiederübertragen wird.

12. Das Drahtlos-Endgerät wie in Anspruch 11 beansprucht, wobei:
eine Information, welche sich auf das vorbestimmte Timing bezieht, zu dem die Information wiederübertragen wird, welche von der Wiederübertragungsanforderung angefordert wurde, in die Wiederübertragungsinformation eingefügt wird, und
das Wiederübertragungssteuermittel die Wiederübertragungsinformation basierend auf der Information empfängt, welche von der Informationsverteilungsvorrichtung empfangen wird, und, welche sich auf den Übertragungskanal und das Übertragungstiming zum Mitteilen der Wiederübertragungsinformation bezieht, und
die Information empfängt, welche von der Informationsverteilungsvorrichtung basierend auf der Information wiederübertragen wird, die sich auf den Übertragungskanal zum Wiederübertragen der Information bezieht, und der Information, die sich auf das vorbestimmte Timing bezieht, eingefügt in die Wiederübertragungsinformation, welche von der Informationsverteilungsvorrichtung empfangen werden.

13. Das Drahtlos-Endgerät, wie in Anspruch 11 beansprucht, wobei:
das Wiederübertragungssteuermittel die Wiederübertragungsanforderung überträgt, wenn die vorbestimmte Information gebildet wird, welche des Wiederübertragens bedarf, und welches die Übertragung der Wiederübertragungsanforderung von der vorbestimmten Information abbricht, wenn Wiederübertragungsinformation mitgeteilt wird, welche anzeigt, dass eine Wiederübertragungsanforderung von der vorbestimmten Information von einem anderen Drahtlos-Endgerät innerhalb der Drahtlosregion zu einem Timing gemacht worden ist, bevor das Wiederübertragungssteuermittel die Wiederübertragungsanforderung macht.

## Revendications

1. Procédé de commande de retransmission pour un service de distribution d'informations de multidiffusion qui distribue des informations de multidiffusion (A, B, C) par rapport à une pluralité de terminaux sans fil (10A, 10B, 10C, 111) à l'intérieur d'une zone de service (ES) à partir d'un appareil de distribution d'informations (20) par le biais d'une région sans fil, **caractérisé par** le fait de comprendre les étapes consistant à :
(a) transmettre une requête de retransmission pour des informations qui requièrent une retransmission, à partir d'un terminal sans fil arbitraire à l'appareil de distribution d'informations, à une temporisation déterminée par le terminal sans fil lorsque les informations qui requièrent une retransmission sont générées ;
(b) après avoir reçu la requête de retransmission pour les informations à partir du terminal sans fil arbitraire à l'intérieur de la zone de service, notifier les informations de retransmission en indiquant les informations requises par la requête de retransmission par rapport à chacun des terminaux sans fil à l'intérieur de la zone de service à partir de l'appareil de distribution d'informations, et retransmettre les informations requises par la requête de retransmission à partir de l'appareil de distribution d'informations à une temporisation prédéterminée ; et
(c) ne faire aucune requête de retransmission pour les informations à partir de chacun des terminaux sans fil si les informations de retransmission sont reçues par chacun des terminaux sans fil avant la temporisation prédéterminée, et chacun des terminaux sans fil reçoit les informations retransmises à partir de l'appareil de distribution d'informations à une temporisation prédéterminée.

2. Procédé de commande de retransmission pour le service de distribution d'informations de multidiffusion tel que revendiqué à la revendication 1, comprenant en outre l'étape consistant à :
(d) gérer intensivement dans l'appareil de distribution d'informations des requêtes de retransmission pour les mêmes informations faites par rapport au même service de distribution d'informations de multidiffusion jusqu'à la temporisation prédéterminée, et retransmettre à partir de l'appareil de distribution d'informations des informations relatives aux requêtes de retransmission intensivement gérées à la temporisation prédéterminée.

3. Procédé de commande de retransmission pour le service de distribution d'informations de multidiffusion tel que revendiqué à la revendication 1, comprenant en outre les étapes consistant à :
(d) inclure des informations relatives à la temporisation prédéterminée à laquelle les informations requises par la requête de retransmission sont retransmises dans les informations de retransmission, et notifier chacun des terminaux sans fil à l'intérieur de la zone de service à partir des informations de l'appareil de distribution d'informations relatives à un canal de transmission et une temporisation de transmission pour notifier les informations de retransmission et les informations relatives à un canal de transmission afin de retransmettre les informations requises par la requête de retransmission ; et
(e) recevoir les informations de retransmission par chacun des terminaux sans fil à l'intérieur de la zone de service basées sur les informations qui sont reçues à partir de l'appareil de distribution d'informations et sont relatives au canal de transmission et à la temporisation de transmission pour notifier les informations de retransmission, et recevoir les informations retransmises à partir de l'appareil de distribution d'informations basées sur les informations relatives au canal de transmission pour retransmettre les informations et les informations relatives à la temporisation prédéterminée incluses dans les informations de retransmission qui sont reçues à partir de l'appareil de distribution d'informations.

4. Procédé de commande de retransmission pour le service de distribution d'informations de multidiffusion tel que revendiqué à la revendication 1, comprenant en outre l'étape consistant à :
(d) gérer les informations requises par la requête de retransmission dans des catégories selon une règle prédéterminée, et gérer les temporisations pour retransmettre les informations pour chacune des catégories, dans l'appareil de distribution d'informations.

5. Procédé de commande de retransmission pour le service de distribution d'informations de multidiffusion tel que revendiqué à la revendication 1, comprenant en outre l'étape consistant à :
(d) commander une valeur limite supérieure d'un nombre de retransmissions des informations requises par la requête de retransmission en fonction des informations de multidiffusion qui sont distribuées à partir de l'appareil de distribution d'informations.

6. Système de commande de retransmission (101, 111) pour un service de distribution d'informations de multidiffusion qui distribue des informations de multidiffusion par rapport à une pluralité de terminaux sans fil à l'intérieur d'une zone de service à partir d'un appareil de distribution d'informations par le biais d'une région sans fil, **caractérisé par** le fait de comprendre :
des moyens de détermination de temporisation (116), dans chaque terminal sans fil, pour déterminer une temporisation à laquelle une requête de retransmission pour les informations qui requièrent une retransmission doit être transmise lorsque les informations qui requièrent une retransmission sont générées ;
des premiers moyens de commande de retransmission (113), dans chaque terminal sans fil, pour transmettre la requête de retransmission pour les informations par rapport à l'appareil de distribution d'informations à la temporisation déterminée par lesdits moyens de détermination de temporisation ;
des moyens de gestion d'informations de commande de retransmission (23b), dans l'appareil de distribution d'informations, pour gérer des informations de retransmission indiquant les informations requises par la requête de retransmission après avoir reçu la requête de retransmission pour les informations à partir d'un terminal sans fil arbitraire à l'intérieur de la zone de service ; et
des seconds moyens de commande de retransmission (23a), dans l'appareil de distribution d'informations, pour transmettre des informations relatives à la requête de retransmission indiquées par les informations de retransmission à chaque terminal sans fil à l'intérieur de la zone de service à une temporisation prédéterminée,
où chaque terminal sans fil ne fait aucune requête de retransmission pour les informations par les premiers moyens de commande de retransmission si les informations de retransmission sont reçues avant la temporisation déterminée par lesdits moyens de détermination de temporisation, et chaque terminal sans fil reçoit les informations retransmises à partir de l'appareil de distribution d'informations à la temporisation prédéterminée.

7. Système de commande de retransmission pour le service de distribution d'informations de multidiffusion tel que revendiqué à la revendication 6, comprenant en outre :
des moyens de gestion d'informations de distribution (23c), dans l'appareil de distribution d'informations, pour gérer intensivement des requêtes de retransmission pour les mêmes informations faites par rapport au même service de distribution d'informations de multidiffusion jusqu'à la temporisation prédéterminée,
lesdits seconds moyens de commande de retransmission retransmettant des informations relatives aux requêtes de retransmission intensivement gérées par lesdits moyens de gestion d'informations de distribution à la temporisation prédéterminée.

8. Système de commande de retransmission pour le service de distribution d'informations de multidiffusion tel que revendiqué à la revendication 6, où :
des informations qui sont relatives à la temporisation prédéterminée à laquelle les informations requises par la requête de retransmission sont retransmises, sont incluses dans les informations de retransmission,
ledit appareil de distribution d'informations notifie à chacun des terminaux sans fil à l'intérieur de la zone de service des informations relatives à un canal de transmission et une temporisation de transmission pour notifier les informations de retransmission et les informations relatives à un canal de transmission afin de retransmettre les informations requises par la requête de retransmission, par les seconds moyens de commande de retransmission, et
lesdits premiers moyens de commande de retransmission dans chaque terminal sans fil reçoivent les informations de retransmission basées sur les informations qui sont reçues à partir de l'appareil de distribution d'informations et sont relatives au canal de transmission et à la temporisation de transmission pour notifier les informations de retransmission, et reçoivent les informations retransmises à partir de l'appareil de distribution d'informations basées sur les informations relatives au canal de transmission pour retransmettre les informations et les informations relatives à la temporisation prédéterminée incluses dans les informations de retransmission qui sont reçues à partir de l'appareil de distribution d'informations.

9. Système de commande de retransmission pour le service de distribution d'informations de multidiffusion tel que revendiqué à la revendication 6, comprenant en outre :
des moyens de gestion (22), dans l'appareil de distribution d'informations, pour gérer les informations requises par la requête de retransmission dans des catégories selon une règle prédéterminée, et gérer les temporisations pour retransmettre les informations pour chacune des catégories.

10. Système de commande de retransmission pour le service de distribution d'informations de multidiffusion tel que revendiqué à la revendication 6, comprenant en outre :
des moyens de gestion d'informations de commande de retransmission, dans l'appareil de distribution d'informations, pour gérer une valeur limite supérieure d'un nombre de retransmissions des informations requises par la requête de retransmission en fonction des informations de multidiffusion qui sont distribuées à partir de l'appareil de distribution d'informations.

11. Terminal sans fil qui reçoit des informations de multidiffusion distribuées à partir d'un appareil de distribution d'informations par le biais d'une région sans fil, et reçoit des informations retransmises à partir de l'appareil de distribution d'informations selon une commande de transmission, **caractérisé par** le fait de comprendre :
des moyens de détermination de temporisation pour déterminer une temporisation pour transmettre une requête de retransmission pour des informations qui requièrent une retransmission ; et
des moyens de commande de retransmission pour transmettre la requête de retransmission pour les informations par rapport à l'appareil de distribution d'informations à la temporisation déterminée par lesdits moyens de détermination de temporisation,
lesdits moyens de commande de retransmission ne faisant aucune requête de retransmission pour les informations si les informations de retransmission sont reçues avant la temporisation déterminée par lesdits moyens de détermination de temporisation, et recevant les informations retransmises à partir de l'appareil de distribution d'informations après la temporisation déterminée par lesdits moyens de détermination de temporisation.

12. Terminal sans fil tel que revendiqué à la revendication 11, où :
des informations qui sont relatives à la temporisation prédéterminée à laquelle les informations requises par la requête de retransmission sont retransmises, sont incluses dans les informations de retransmission, et
lesdits moyens de commande de retransmission reçoivent les informations de retransmission basées sur les informations qui sont reçues à partir de l'appareil de distribution d'informations et sont relatives au canal de transmission et à la temporisation de transmission pour notifier les informations de retransmission, et reçoivent les informations retransmises à partir de l'appareil de distribution d'informations basées sur les informations relatives au canal de transmission pour retransmettre les informations et les informations relatives à la temporisation prédéterminée incluses dans les informations de retransmission qui sont reçues à partir de l'appareil de distribution d'informations.

13. Terminal sans fil tel que revendiqué à la revendication 11, où : =
lesdits moyens de commande de retransmission transmettent la requête de retransmission lorsque des informations prédéterminées qui requièrent une retransmission sont générées, et interrompent la transmission de la requête de retransmission pour les informations prédéterminées lorsqu'on leur notifie les informations de retransmission qui indiquent qu'une requête de retransmission pour les informations prédéterminées est faite à partir d'un autre terminal sans fil à l'intérieur de la région sans fil à une temporisation avant que lesdits moyens de commande de retransmission ne fassent la requête de retransmission.
